# EUROPEAN PATENT SPECIFICATION

(11) **EP 4 418 085 B1**
(45) Date of publication and mention of the grant of the patent: **25.03.2026**
(21) Application number: 22894650.5
(22) Date of filing: 04.11.2022
(51) Int. Cl.: G06F 3/041, G06F 3/16

(54) **POSITION IDENTIFICATION METHOD, AND ELECTRONIC DEVICE**
POSITIONSIDENTIFIZIERUNGSVERFAHREN UND ELEKTRONISCHE VORRICHTUNG
PROCÉDÉ D'IDENTIFICATION DE POSITION ET DISPOSITIF ÉLECTRONIQUE

(30) Priority: 22.11.2021 CN 202111387514
(43) Date of publication of application: 21.08.2024
(73) Proprietor: Huawei Technologies Co., Ltd., Shenzhen, Guangdong 518129 (CN)
(72) Inventor: TIAN, Yuan, Shenzhen, Guangdong 518129 (CN); WANG, Qi, Shenzhen, Guangdong 518129 (CN); DU, Zhenguo, Shenzhen, Guangdong 518129 (CN)
(74) Representative: Goddar, Heinz J.
(86) International application number: PCT/CN2022/130100
(87) International publication number: WO 2023/088113

(56) References cited:
- WO-A1-2016/003842
- WO-A1-2020/005655
- WO-A1-2020/077389
- CN-A- 104 423 539
- CN-A- 111 148 036
- CN-A- 111 883 186
- CN-A- 112 688 741
- KR-B1- 101 040 181
- US-A1- 2018 242 095

## Description

### TECHNICAL FIELD

This application relates to the field of terminal technologies, and more specifically, to a location identification method and an electronic device.

### BACKGROUND

With acceleration of office pace, if a clerical employee can implement cross-device cursor movement, cross-device copy, paste, or drag, or the like between a plurality of electronic devices, office efficiency can be greatly improved.

In the conventional technology, a user needs to manually set a relative location relationship between every two of the plurality of electronic devices, to implement cross-device cursor movement, cross-device copy, paste, or drag, or the like between the plurality of electronic devices. Consequently, the operation is not simple and convenient enough.
WO 2020/077389 A1 discloses a method for determining an orientation of an anatomical feature of a user in relation to an electronic devie. A wearable device is located relative to the anatomical feature of the user, the wearable device comprising a first transducer and a second transducer, and the electronic device comprising a third transducer. The method comprises transmitting and receiving a first acoustic signal between the first transducer and the third transducer. The method further comprises transmitting and receiving a second acoustic signal between the second transducer and the third transducer. The method further comprises determining a first received time associated with the first acoustic signal and determining a second received time associated with the second acoustic signal. The method also comprises determining the orientation of the anatomical feaeture of the user in relation to the electronic device based on the first and second received times.
KR 101040181 B1 discloses a portable terminal comprising a speaker for outputting a beep signal for position confirmation, a communication controller for setting a wireless data communication path in relation to another portable terminal, a microphone for recording a beep signal output from the speaker and a beep signal output from the other portable termine. The beep signal of the other portable terminal is outputted to the other poratbable terminal based on the information on the time when the beep signal of the other poratable terminal is recorded in the microphone and the information of the time when the beep signal of the other operable terminal received through the wireless data communication path is outputted.
WO 2016/003842 A1 discloses calibrating sound pressure levels of speakers to determine desired attenuation data for use in later playback. A user may be guided to a calibtration location to place a microphone, and each speaker is calibrated to output a desired sound pressure level in its current acoustic environment based upon the attenuation data learned during calibtration. During playback, the attenuation data is used. Also described is testing the setup of the speakers, and dynamically adjusting the attenuation data in real time based upon tracking the listener's current location.
WO 2020/005655 A1 discloses a computing system that includes a primary display and a secondary display operatively coupled ot a processor and configured to transmit a first signal and a second signal, respectively. The processor is configured to execute an ultrasonic discovery protocol upon detection of a positional trigger event. Execution of the ultrasonic discovery protocol by the processor causes the primary display device to transmit the first signal as an acoustic signal that is received by the secondary display device. In response to receiving the first signal, the secondary display device transmits the second signal to the primary display device. The second signal encodes data that indicates a positional relationship between the primary display device and the secondary display device. Based on the indicated positional relationship, the visual data is cooperatively displayed by the primary and secondary display devices.

### SUMMARY

The invention is set out in the appended claims. Embodiments of this application provide a location identification method and an electronic device. According to this method, a relative location relationship between every two of a plurality of devices can be automatically identified, and a user does not need to manually set the relative location relationship between every two of the plurality of devices. Therefore, an operation is simple and convenient.

According to a first aspect, a location identification method is provided. The method is applied to a first electronic device and includes: The first electronic device sends first indication information to at least two second electronic devices, where the first indication information indicates the corresponding second electronic devices to enable sound recording functions; the first electronic device sends second indication information to a third electronic device, where the second indication information indicates the third electronic device to send an ultrasonic signal, and the ultrasonic signal is alternately sent via a first speaker with a progressively decreasing frequency and via a second speaker with a progressively increasing frequency, and is used to determine a relative location relationship between each of the at least two second electronic devices and the third electronic device; then, the first electronic device receives the relative location relationship between each of the at least two second electronic devices and the third electronic device that is sent by each of the at least two second electronic devices; and finally, the first electronic device sends the relative location relationship between each of the at least two second electronic devices and the third electronic device to the at least two second electronic devices and the third electronic device, or the first electronic device determines a relative location relationship between every two of the at least two second electronic devices based on the relative location relationship between each of the at least two second electronic devices and the third electronic device.

Based on the foregoing technical solution, the first electronic device indicates the at least two second electronic devices to enable respective sound recording functions, and indicates the third electronic device to send the ultrasonic signal. After enabling the sound recording functions, the at least two second electronic devices determine, based on the ultrasonic signals detected by using the respective sound recording functions, the relative location relationship between each of the at least two second electronic devices and the third electronic device, and then send the relative location relationship between each of the at least two second electronic devices and the third electronic device to the first electronic device. Finally, after determining the relative location relationship between each of the at least two second electronic devices and the third electronic device based on the relative location relationship between each of the at least two second electronic devices and the third electronic device, the first electronic device sends the relative location relationship between each of the at least two second electronic devices and the third electronic device to the at least two second electronic devices and the third electronic device. This can implement cross-device cursor movement, cross-device copy, paste, or drag, or the like between the at least two second electronic devices and the third electronic device. According to this method, a user does not need to manually set a relative location relationship between every two of a plurality of devices. Therefore, the operation is simple and convenient.

The following uses an example in which the at least two second electronic devices include the two second electronic devices to describe, based on different cases, a method for determining a relative location relationship between the two second electronic devices.

Case 1: The two second electronic devices are respectively located on opposite sides of the third electronic device.

For example, a relative location relationship sent by one of the two second electronic devices to the first electronic device indicates that the second electronic device in the two second electronic devices is located on a first side of the third electronic device, and a relative location relationship sent by the other second electronic device in the two second electronic devices to the first electronic device indicates that the other second electronic device in the two second electronic devices is located on a second side of the third electronic device, where the first side is opposite to the second side, and the first side is the left side or the right side.

In this case, the first electronic device may determine that the two second electronic devices are respectively located on the opposite sides of the third electronic device. For example, the second electronic device in the two second electronic devices is located on the left side of the third electronic device, and the other second electronic device in the two second electronic devices is located on the right side of the third electronic device; or the second electronic device in the two second electronic devices is located on the right side of the third electronic device, and the other second electronic device in the two second electronic devices is located on the left side of the third electronic device.

Case 2: The two second electronic devices are both located on a same side of the third electronic device.

For example, relative location relationships sent by the two second electronic devices to the first electronic device both indicate that the two second electronic devices are located on the same side of the third electronic device, for example, both indicate that the two second electronic devices are located on the left side or the right side of the third electronic device.

In this case, the first electronic device may send the first indication information to one of the two second electronic devices, to indicate the second electronic device in the two second electronic devices to enable a sound recording function, and send the second indication information to the other second electronic device in the two second electronic devices, to indicate the other second electronic device in the two second electronic devices to send an ultrasonic signal. The second electronic device in the second electronic devices determines a relative location relationship between the two second electronic devices based on the detected ultrasonic signal from the other second electronic device, and sends the relative location relationship between the two second electronic devices to the first electronic device.

Based on the foregoing technical solution, when the two second electronic devices are located on the same side of the third electronic device, the second electronic device in the two second electronic devices enables the sound recording function, and the other second electronic device in the two second electronic devices sends the ultrasonic signal. In this way, the second electronic device in the two second electronic devices can determine the relative location relationship between the second electronic device and the other second electronic device based on the ultrasonic signal.

With reference to the first aspect, in some implementations of the first aspect, before the second indication information is sent to the other second electronic device in the two second electronic devices, the method further includes: The first electronic device receives an acknowledgment message that is for the first indication information and that is sent by the second electronic device in the two second electronic devices, where the acknowledgment message for the first indication information indicates that the sound recording function is enabled on the second electronic device in the two second electronic devices.

Based on the foregoing technical solution, the second electronic device in the two second electronic devices sends the acknowledgment information for the received first indication information to the first electronic device, so that the first electronic device can determine, based on the acknowledgment information, that the sound recording function is enabled on the second electronic device in the second electronic devices. In this case, the first electronic device then indicates the other second electronic device in the two second electronic devices to send the ultrasonic signal. The other second electronic device is indicated to send the ultrasonic signal after it is ensured that the sound recording function is enabled on the second electronic device in the two second electronic devices. In this way, the second electronic device in the second electronic devices can receive at least one group of ultrasonic signals from a left speaker and a right speaker of the other second electronic device. The second electronic device in the second electronic devices can determine the relative location relationship between the second electronic device and the other second electronic device in the two second electronic devices only when receiving the at least one group of ultrasonic signals from the left speaker and the right speaker of the electronic device that sends the ultrasonic signals. In addition, the other electronic device is indicated to send the ultrasonic signal after it is ensured that the sound recording function is enabled on the second electronic device in the second electronic devices. This can further reduce a possibility that the second electronic device in the two second electronic devices receives an invalid signal, and reduce difficulty in processing a received signal.

With reference to the first aspect and the foregoing implementations, in some implementations of the first aspect, before the second indication information is sent to the third electronic device, the method further includes: The first electronic device receives acknowledgment messages for the first indication information that are sent by the at least two second electronic devices, where the sound recording functions are enabled on the acknowledgment messages indicate that the corresponding second electronic devices.

Based on the foregoing technical solution, the at least two second electronic devices send the acknowledgment information for the received first indication information to the first electronic device, so that the first electronic device can determine, based on the acknowledgment information, that the sound recording functions are enabled on the at least two second electronic devices. In this case, the first electronic device then indicates the third device to send the ultrasonic signal. The third electronic device is indicated to send the ultrasonic signal after it is ensured that the sound recording functions are enabled on the at least two second electronic devices. In this way, the at least two second electronic devices can receive at least one group of ultrasonic signals from a left speaker and a right speaker of the third electronic device. The at least two second electronic devices can determine the relative location relationship between each of the second electronic device and the third electronic device only when receiving the at least one group of ultrasonic signals from the left speaker and the right speaker of the third electronic device. In addition, the third electronic device is indicated to send the ultrasonic signal after it is ensured that the sound recording functions are enabled on the at least two electronic devices. This can further reduce a possibility that the at least two second electronic devices receive an invalid signal, and reduce difficulty in processing a received signal.

According to a second aspect, a location identification method is provided. The method is applied to a second electronic device, and the method includes: The second electronic device receives first indication information from a first electronic device, where the first indication information indicates the second electronic device to enable a sound recording function; the second electronic device enables the sound recording function based on the first indication information; next, the second electronic device determines a relative location relationship between the second electronic device and a third electronic device based on an ultrasonic signal that is alternately sent from the third electronic device via a first speaker with a progressively decreasing frequency and via a second speaker with a progressively increasing frequency, and that is detected based on the sound recording function; then, the second electronic device sends the relative location relationship between the second electronic device and the third electronic device to the first electronic device; and finally, the second electronic device receives a relative location relationship between the third electronic device and each of at least two second electronic devices including the second electronic device that is sent by the first electronic device.

Based on the foregoing technical solution, the first electronic device indicates the at least two second electronic devices (the foregoing second electronic device is one of the at least two second electronic devices) to enable respective sound recording functions, and indicates the third electronic device to send the ultrasonic signal. After enabling the sound recording functions, the at least two second electronic devices determine, based on ultrasonic signals detected by using the respective sound recording functions, the relative location relationship between each of the at least two second electronic devices and the third electronic device, and then send the relative location relationship between each of the at least two second electronic devices and the third electronic device to the first electronic device. Finally, after determining the relative location relationship between each of the at least two second electronic devices and the third electronic device based on the relative location relationship between each of the at least two second electronic devices and the third electronic device, the first electronic device sends the relative location relationship between each of the at least two second electronic devices and the third electronic device to the at least two second electronic devices and the third electronic device. This can implement cross-device cursor movement, cross-device copy, paste, or drag, or the like between the at least two second electronic devices and the third electronic device. According to this method, a user does not need to manually set the relative location relationship between every two of the plurality of devices. Therefore, the operation is simple and convenient.

With reference to the second aspect, in some implementations of the second aspect, the second electronic device is one of two second electronic devices, and the relative location relationship between the second electronic device and the third electronic device includes: The second electronic device is located on a first side of the third electronic device, where the first side is opposite to a second side, the second side refers to a relative location relationship between the third electronic device and the other second electronic device in the two second electronic devices, and the first side is the left side or the right side.

With reference to the second aspect and the foregoing implementations, in some implementations of the second aspect, the second electronic device is one of two second electronic devices, and the method further includes: The second electronic device receives the first indication information sent by the first electronic device; the second electronic device enables the sound recording function based on the first indication information; the second electronic device determines a relative location relationship between the second electronic device and the other second electronic device based on an ultrasonic signal that is from the other second electronic device in the two second electronic devices and that is detected based on the sound recording function; and the second electronic device sends the relative location relationship between the second electronic device and the other second electronic device to the first electronic device.

Based on the foregoing technical solution, when the two second electronic devices are located on a same side of the third electronic device, the second electronic device in the two second electronic devices enables the sound recording function, and the other second electronic device in the two second electronic devices sends the ultrasonic signal. In this way, the second electronic device in the two second electronic devices can determine the relative location relationship between the second electronic device and the other second electronic device based on the ultrasonic signal.

With reference to the second aspect and the foregoing implementations, in some implementations of the second aspect, the second electronic device is one of two second electronic devices, and the method further includes: Second indication information sent by the first electronic device is received, where the second indication information indicates the second electronic device to play the ultrasonic signal; and the second electronic device plays the ultrasonic signal based on the second indication information, where the ultrasonic signal is used to determine a relative location relationship between the two second electronic devices.

With reference to the second aspect and the foregoing implementations, in some implementations of the second aspect, after that the second electronic device enables the sound recording function, the method further includes: The second electronic device sends an acknowledgment message for the first indication information to the first electronic device, where the acknowledgment message for the first indication information indicates that the sound recording function is enabled on the second electronic device.

Based on the foregoing technical solution, the second electronic device sends the acknowledgment information for the received first indication information to the first electronic device, so that the first electronic device can determine, based on the acknowledgment information, that the sound recording function is enabled on the second electronic device. In this case, the first electronic device then indicates an electronic device that is to send the ultrasonic signal to send the ultrasonic signal. The electronic device that is to send the ultrasonic signal is indicated to send the ultrasonic signal after it is ensured that the sound recording function is enabled on the second electronic device. In this way, the second electronic device can receive at least one group of ultrasonic signals from a left speaker and a right speaker of the electronic device that sends the ultrasonic signal. The second electronic device can determine a relative location relationship between the second electronic device and the electronic device that sends the ultrasonic signal only when receiving the at least one group of ultrasonic signals from the left speaker and the right speaker of the electronic device that sends the ultrasonic signal. In addition, the electronic device that is to send the ultrasonic signal is indicated to send the ultrasonic signal after it is ensured that the sound recording function is enabled on the second electronic device. This can further reduce a possibility that the second electronic device receives an invalid signal, and reduce difficulty in processing a received signal.

According to a third aspect, a location identification method is provided, applied to a third electronic device. The method includes: The third electronic device sends first indication information to at least two second electronic devices, where the first indication information indicates the corresponding second electronic devices to enable sound recording functions; the third electronic device plays an ultrasonic signal, where the ultrasonic signal is used to determine a relative location relationship between the third electronic device and each of the at least two second electronic devices; the third electronic device receives the relative location relationship between each of the at least two second electronic devices and the third electronic device that is sent by each of the at least two second electronic devices; and finally, the third electronic device sends a relative location relationship between each of the at least two second electronic devices and the third electronic device to the at least two second electronic devices, or the third electronic device determines a relative location relationship between every two of the at least two second electronic devices based on the relative location relationship between each of the at least two second electronic devices and the third electronic device.

Based on the foregoing technical solution, the third electronic device indicates the at least two second electronic devices to enable respective sound recording functions, and sends the ultrasonic signal. After enabling the sound recording functions, the at least two second electronic devices determine, based on ultrasonic signals detected by using the respective sound recording functions, the relative location relationship between each of the at least two second electronic devices and the third electronic device, and then send the relative location relationship between each of the at least two second electronic devices and the third electronic device to the third electronic device. Finally, after determining the relative location relationship between each of the at least two second electronic devices and the third electronic device based on the relative location relationship between each of the at least two second electronic devices and the third electronic device, the third electronic device sends the relative location relationship between each of the at least two second electronic devices and the third electronic device to the at least two second electronic devices. This can implement cross-device cursor movement, cross-device copy, paste, or drag, or the like between the at least two second electronic devices and the third electronic device. According to this method, a user does not need to manually set the relative location relationship between every two of the plurality of devices. Therefore, the operation is simple and convenient.

The following uses an example in which the at least two second electronic devices include the two second electronic devices to describe, based on different cases, a method for determining a relative location relationship between the two second electronic devices.

Case 1: The two second electronic devices are respectively located on opposite sides of the third electronic device.

For example, a relative location relationship sent by one of the two second electronic devices to the third electronic device indicates that the second electronic device in the two second electronic devices is located on a first side of the third electronic device, and a relative location relationship sent by the other second electronic device in the two second electronic devices to the third electronic device indicates that the other second electronic device in the two second electronic devices is located on a second side of the third electronic device, where the first side is opposite to the second side, and the first side is the left side or the right side.

In this case, the third electronic device may determine that the two second electronic devices are respectively located on opposite sides of the third electronic device. For example, the second electronic device in the two second electronic devices is located on the left side of the third electronic device, and the other second electronic device in the two second electronic devices is located on the right side of the third electronic device; or the second electronic device in the two second electronic devices is located on the right side of the third electronic device, and the other second electronic device in the two second electronic devices is located on the left side of the third electronic device.

Case 2: The two second electronic devices are both located on a same side of the third electronic device.

For example, relative location relationships sent by the two second electronic devices to the third electronic device both indicate that the two second electronic devices are located on the same side of the third electronic device, for example, both indicate that the two second electronic devices are located on the left side or the right side of the third electronic device.

In this case, the third electronic device may send the first indication information to one of the two second electronic devices, to indicate the second electronic device in the two second electronic devices to enable a sound recording function, and send second indication information to the other second electronic device in the two second electronic devices, to indicate the other second electronic device in the two second electronic devices to send the ultrasonic signal. The second electronic device in the second electronic devices determines a relative location relationship between the two second electronic devices based on the detected ultrasonic signal from the other second electronic device, and send the relative location relationship between the two second electronic devices to the third electronic device.

Based on the foregoing technical solution, when the two second electronic devices are located on the same side of the third electronic device, the second electronic device in the two second electronic devices enables the sound recording function, and the other second electronic device in the two second electronic devices sends the ultrasonic signal. In this way, the second electronic device in the two second electronic devices can determine the relative location relationship between the second electronic device and the other second electronic device based on the ultrasonic signal.

With reference to the third aspect, in some implementations of the third aspect, before the second indication information is sent to the other second electronic device in the two second electronic devices, the method further includes: The third electronic device receives an acknowledgment message that is for the first indication information and that is sent by the second electronic device in the two second electronic devices, where the acknowledgment message for the first indication information indicates that the sound recording function is enabled on the second electronic device in the two second electronic devices.

Based on the foregoing technical solution, the second electronic device in the two second electronic devices sends the acknowledgment information for the received first indication information to the third electronic device, so that the third electronic device can determine, based on the acknowledgment information, that the sound recording function is enabled on the second electronic device in the second electronic devices. In this case, the third electronic device then indicates the other second electronic device in the two second electronic devices to send the ultrasonic signal. The other second electronic device is indicated to send the ultrasonic signal after it is ensured that the sound recording function is enabled on the second electronic device in the two second electronic devices. In this way, the second electronic device in the second electronic devices can receive at least one group of ultrasonic signals from a left speaker and a right speaker of the other second electronic device. The second electronic device in the second electronic devices can determine the relative location relationship between the second electronic device and the other second electronic device in the two second electronic devices only when receiving the at least one group of ultrasonic signals from the left speaker and the right speaker of the electronic device that sends the ultrasonic signals. In addition, the other electronic device is indicated to send the ultrasonic signal after it is ensured that the sound recording function is enabled on the second electronic device in the second electronic devices. This can further reduce a possibility that the second electronic device in the two second electronic devices receives an invalid signal, and reduce difficulty in processing a received signal.

With reference to the third aspect and the foregoing implementations, in some implementations of the third aspect, before that the third electronic device plays an ultrasonic signal, the method further includes: The third electronic device receives acknowledgment messages for the first indication information that are sent by the at least two second electronic devices, where the acknowledgment messages indicate that the sound recording functions are enabled on the corresponding second electronic devices.

Based on the foregoing technical solution, the at least two second electronic devices send the acknowledgment information for the received first indication information to the third electronic device, so that the third electronic device can determine, based on the acknowledgment information, that the sound recording functions are enabled on the at least two second electronic devices. In this case, the third electronic device then sends the ultrasonic signal. In this way, the at least two second electronic devices can receive at least one group of ultrasonic signals from a left speaker and a right speaker of the third electronic device. The at least two second electronic devices can determine the relative location relationship between each of the second electronic devices and the third electronic device only when receiving the at least one group of ultrasonic signals from the left speaker and the right speaker of the third electronic device. In addition, the third electronic device sends the ultrasonic signal after it is ensured that the sound recording functions are enabled on the at least two second electronic devices. This can further reduce a possibility that the at least two second electronic devices receive an invalid signal, and reduce difficulty in processing a received signal.

According to a fourth aspect, a location identification method is provided, applied to a second electronic device. The method includes: The second electronic device receives first indication information from a third electronic device, where the first indication information indicates the second electronic device to enable a sound recording function; the second electronic device enables the sound recording function based on the first indication information; next, the second electronic device determines a relative location relationship between the second electronic device and the third electronic device based on an ultrasonic signal that is from the third electronic device and that is detected based on the sound recording function; then, the second electronic device sends the relative location relationship between the second electronic device and the third electronic device to the third electronic device; and finally, the second electronic device receives a relative location relationship between the third electronic device and each of at least two second electronic devices including the second electronic device that is sent by the third electronic device.

Based on the foregoing technical solution, the third electronic device indicates the at least two second electronic devices (the foregoing second electronic device is one of the at least two second electronic devices) to enable respective sound recording functions, and sends the ultrasonic signal. After enabling the sound recording functions, the at least two second electronic devices determine, based on ultrasonic signals detected by using the respective sound recording functions, the relative location relationship between each of the at least two second electronic devices and the third electronic device, and then send the relative location relationship between each of the at least two second electronic devices and the third electronic device to the third electronic device. Finally, after determining the relative location relationship between each of the at least two second electronic devices and the third electronic device based on the relative location relationship between each of the at least two second electronic devices and the third electronic device, the third electronic device sends the relative location relationship between each of the at least two second electronic devices and the third electronic device to the at least two second electronic devices. This can implement cross-device cursor movement, cross-device copy, paste, or drag, or the like between the at least two second electronic devices and the third electronic device. According to this method, a user does not need to manually set the relative location relationship between every two of the plurality of devices. Therefore, the operation is simple and convenient.

With reference to the fourth aspect, in some implementations of the fourth aspect, the second electronic device is one of two second electronic devices, and the relative location relationship between the second electronic device and the third electronic device includes: The second electronic device is located on a first side of the third electronic device, where the first side is opposite to a second side, the second side refers to a relative location relationship between the third electronic device and the other second electronic device in the two second electronic devices, and the first side is the left side or the right side.

With reference to the fourth aspect and the foregoing implementations, in some implementations of the fourth aspect, the second electronic device is one of two second electronic devices, and the method further includes: The second electronic device receives the first indication information sent by the third electronic device; the second electronic device enables the sound recording function based on the first indication information; the second electronic device determines a relative location relationship between the second electronic device and the other second electronic device based on an ultrasonic signal that is from the other second electronic device in the two second electronic devices and that is detected based on the sound recording function; and the second electronic device sends the relative location relationship between the second electronic device and the other second electronic device to the third electronic device.

Based on the foregoing technical solution, when the two second electronic devices are located on a same side of the third electronic device, the second electronic device in the two second electronic devices enables the sound recording function, and the other second electronic device in the two second electronic devices sends the ultrasonic signal. In this way, the second electronic device in the two second electronic devices can determine the relative location relationship between the second electronic device and the other second electronic device based on the ultrasonic signal.

With reference to the fourth aspect and the foregoing implementations, in some implementations of the fourth aspect, the second electronic device is one of two second electronic devices, and the method further includes: The second electronic device receives second indication information sent by the third electronic device, where the second indication information indicates the second electronic device to play the ultrasonic signal; and the second electronic device plays the ultrasonic signal based on the second indication information, where the ultrasonic signal is used to determine a relative location relationship between the two second electronic devices.

With reference to the fourth aspect and the foregoing implementations, in some implementations of the fourth aspect, after that the second electronic device enables the sound recording function, the method further includes: The second electronic device sends an acknowledgment message for the first indication information to the third electronic device, where the acknowledgment message for the first indication information indicates that the sound recording function is enabled on the second electronic device.

Based on the foregoing technical solution, the second electronic device sends the acknowledgment information for the received first indication information to the third electronic device, so that the third electronic device can determine, based on the acknowledgment information, that the sound recording function is enabled on the second electronic device. In this case, the third electronic device then sends the ultrasonic signal. The third electronic device sends the ultrasonic signal after it is ensured that the sound recording function is enabled on the second electronic device. In this way, the second electronic device can receive at least one group of ultrasonic signals from a left speaker and a right speaker of the third electronic device. The second electronic device can determine the relative location relationship between the second electronic device and the third electronic device only when receiving the at least one group of ultrasonic signals from the left speaker and the right speaker of the third electronic device. In addition, the third electronic device sends the ultrasonic signal after it is ensured that the sound recording function is enabled on the second electronic device. This can further reduce a possibility that the second electronic device receives an invalid signal, and reduce difficulty in processing a received signal.

According to a fifth aspect, this application provides an apparatus. The apparatus is included in an electronic device, and the apparatus has a function of implementing behavior of the electronic device according to the foregoing aspects and the possible implementations of the foregoing aspects. The function may be implemented by hardware, or may be implemented by executing corresponding software by hardware.

Optionally, the apparatus may be the first electronic device, the second electronic device, or the third electronic device above.

According to a sixth aspect, this application provides an electronic device, including one or more processors, a memory, a plurality of application programs, and one or more computer programs. The one or more computer programs are stored in the memory. The one or more computer programs include instructions. When the instructions are executed by the electronic device, the electronic device is enabled to perform the location identification method according to any one of the foregoing aspects and the possible implementations of the foregoing aspects.

Optionally, the electronic device may be the first electronic device, the second electronic device, or the third electronic device above.

According to a seventh aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the location identification method according to any one of the foregoing aspects and the possible implementations of the foregoing aspects.

According to an eighth aspect, a system is provided. The system includes at least one first electronic device, at least two second electronic devices, and a third electronic device. The first electronic device is configured to perform the location identification method according to any possible implementation of the first aspect. The second electronic device is configured to perform the location identification method according to any possible implementation of the second aspect or the fourth aspect. The third electronic device is configured to perform the location identification method according to any possible implementation of the third aspect.

According to a ninth aspect, this application provides a computer-readable storage medium, including computer instructions. When the computer instructions are run on an electronic device, the electronic device is enabled to perform the location identification method according to any possible implementation of any one of the foregoing aspects.

According to a tenth aspect, this application provides a computer program product. When the computer program product runs on an electronic device, the electronic device is enabled to perform the location identification method according to any possible implementation of any one of the foregoing aspects.

### BRIEF DESCRIPTION OF DRAWINGS

FIG. 1 is a schematic diagram of a structure of an example electronic device according to this application;
FIG. 2 is a schematic diagram of a structure of another example electronic device according to an embodiment of this application;
FIG. 3 is a schematic diagram of an example scenario according to an embodiment of this application;
FIG. 4A and FIG. 4B are an interaction flowchart of an example location identification method according to an embodiment of this application;
FIG. 5 is a schematic diagram of a distribution status of a left speaker and a right speaker on an electronic device according to an embodiment of this application;
FIG. 6A and FIG. 6B are an interaction flowchart of another example location identification method according to an embodiment of this application;
FIG. 7 is a schematic diagram of an example display interface in a location identification process according to an embodiment of this application;
FIG. 8 is a schematic diagram of another example scenario according to an embodiment of this application;
FIG. 9A to FIG. 9C are an interaction flowchart of still another example location identification method according to an embodiment of this application;
FIG. 10A to FIG. 10C are an interaction flowchart of still another example location identification method according to an embodiment of this application;
FIG. 11 is a schematic diagram of still another example scenario according to an embodiment of this application;
FIG. 12A to FIG. 12D are an interaction flowchart of still another example location identification method according to an embodiment of this application;
FIG. 13A to FIG. 13D are an interaction flowchart of still another example location identification method according to an embodiment of this application;
FIG. 14 is a schematic diagram of still another example scenario according to an embodiment of this application;
FIG. 15A to FIG. 15E are an interaction flowchart of still another example location identification method according to an embodiment of this application;
FIG. 16A to FIG. 16E are an interaction flowchart of still another example location identification method according to an embodiment of this application; and
FIG. 17A to FIG. 17C are an interaction flowchart of still another example location identification method according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may indicate A or B. In this specification, "and/or" describes only an association relationship for describing associated objects and represents that three relationships may exist. For example, A and/or B may indicate the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the quantity of indicated technical features. Therefore, a feature limited by "first" or "second", for example, the "first indication information" or the "second indication information" described in embodiments of this application, may explicitly or implicitly include one or more features.

The location identification method provided in embodiments of this application may be applied to an electronic device, for example, a desktop computer, a notebook computer, and a mouse. A specific type of the device is not limited in embodiments of this application.

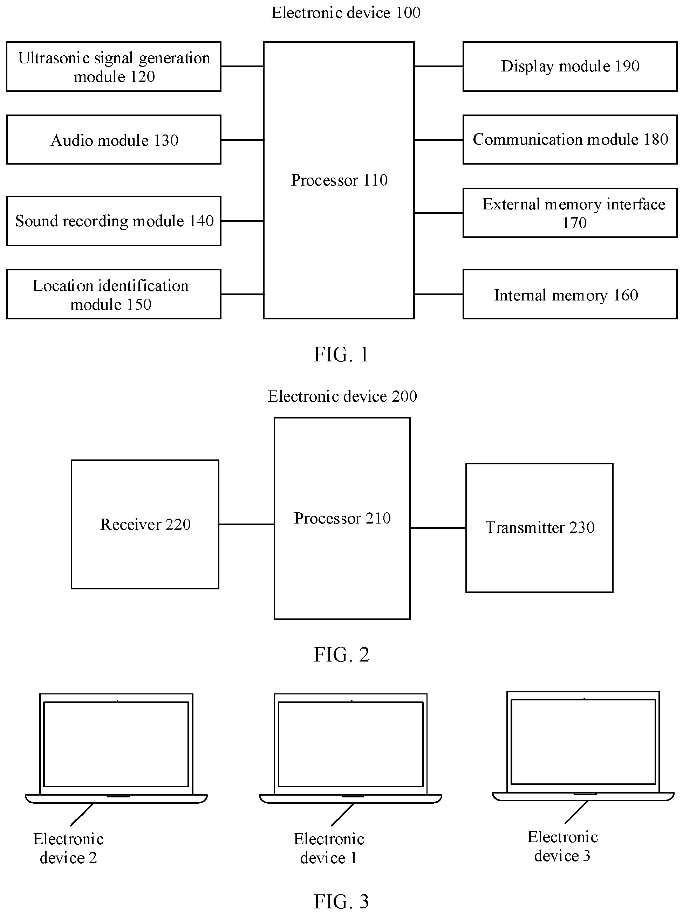

FIG. 1 is a schematic diagram of a structure of an electronic device 100 according to an embodiment of this application. The electronic device 100 may be a desktop computer, a notebook computer, or the like that has a display function.

The electronic device 100 may include a processor 110, an ultrasonic signal generation module 120, an audio module 130, a sound recording module 140, a location identification module 150, an internal memory 160, an external memory interface 170, a communication module 180, and a display module 190.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

A memory may be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

The ultrasonic signal generation module 120 may be configured to generate an ultrasonic signal.

The audio module 130 may be configured to play the ultrasonic signal externally.

The sound recording module 140 may be configured to receive the ultrasonic signal.

The location identification module 150 may be configured to determine a relative location relationship between a plurality of electronic devices based on the ultrasonic signal.

The internal memory 160 may be configured to store computer-executable program code. The executable program code includes instructions. The internal memory 160 may include a program storage area and a data storage area. The program storage area may store an operating system, an application required by at least one function (for example, a voice playing function or an image playing function), and the like. The data storage area may store data (such as audio data and a text) created during use of the electronic device 100, and the like. In addition, the internal memory 160 may include a high-speed random access memory, and may further include a nonvolatile memory, for example, at least one magnetic disk storage component, a flash memory component, and a universal flash storage (universal flash storage, UFS). The processor 110 runs the instructions stored in the internal memory 160, and/or the instructions stored in the memory arranged in the processor to perform various function applications and data processing of the electronic device 100.

The external memory interface 170 may be configured to connect to an external storage device, for example, a USB flash drive, to extend a storage capability of the electronic device 100. The USB flash drive communicates with the processor 110 through the external memory interface 170, to implement a data storage function. For example, files such as music and a video are stored in the USB flash drive.

The communication module 180 may be configured to receive and send instructions or information.

The display module 190 may be configured to display an image, a video, and the like.

FIG. 2 is a schematic diagram of a structure of an electronic device 200 according to an embodiment of this application. The electronic device 200 may be an electronic device, for example, a mouse, that does not have a display function.

The electronic device 200 may include a processor 210, a receiver 220, and a transmitter 230.

It may be understood that the structure shown in embodiments of the present invention does not constitute a specific limitation on the electronic device 200. In some other embodiments of this application, the electronic device 200 may include more or fewer components than those shown in the figure, or combine some components, or split some components, or have a different component arrangement. The components shown in the figure may be implemented by hardware, software, or a combination of software and hardware.

For a description of the processor 210, refer to the foregoing related descriptions of the processor 110. For brevity, details are not described herein again.

When a communication connection exists between the electronic device 200 and the electronic device 100, the receiver 220 may be configured to receive instructions from the electronic device 100, and the transmitter 230 may be configured to send the instructions to the electronic device 100.

With reference to FIG. 3 to FIG. 14, the following describes in detail the location identification method provided in embodiments of this application.

FIG. 3 shows an application scenario of the location identification method according to an embodiment of this application. FIG. 3 shows three electronic devices. For ease of description, the three electronic devices are respectively denoted as an electronic device 1, an electronic device 2, and an electronic device 3. To implement an operation, for example, cross-device cursor movement, between the electronic device 1, the electronic device 2, and the electronic device 3, a relative location relationship between every two of the electronic device 1, the electronic device 2, and the electronic device 3 needs to be determined first. In an implementation, a mouse provided in an embodiment of this application may determine the relative location relationship between every two of the electronic device 1, the electronic device 2, and the electronic device 3. In this case, a communication connection, for example, a short-range communication connection, needs to exist between the mouse and each of the electronic device 1, the electronic device 2, and the electronic device 3, so that the mouse communicates with the electronic device 1, the electronic device 2, and the electronic device 3 in a process of determining the relative location relationship.

In another implementation, one of the electronic device 1, the electronic device 2, and the electronic device 3 may determine the relative location relationship between every two of the electronic device 1, the electronic device 2, and the electronic device 3. In this case, a communication connection, for example, a short-range communication connection, needs to exist between every two of the electronic device 1, the electronic device 2, and the electronic device 3, so that the electronic device 1, the electronic device 2, and the electronic device 3 communicate with each other in a process of determining the relative location relationship. In the following descriptions, it is assumed that a communication connection exists between the mouse and each electronic device, or a communication connection exists between every two of a plurality of electronic devices.

In embodiments of this application, a relative location relationship between two electronic devices may be understood as follows: One electronic device is located on the left side or the right side of the other electronic device. For example, in FIG. 3, a relative location relationship between the electronic device 1 and the electronic device 2 is that the electronic device 1 is located on the right side of the electronic device 2, and a relative location relationship between the electronic device 2 and the electronic device 1 is that the electronic device 2 is located on the left side of the electronic device 1.

It should be understood that a quantity of electronic devices that have display functions, a relative location relationship between the electronic devices, and a type of the electronic device that are included in the scenario shown in FIG. 3 and the following descriptions do not constitute a limitation on embodiments of this application. During specific implementation, more or fewer electronic devices may be included than those in the scenario. There may also be another relative location relationship between the electronic devices other than that in the scenario, and the electronic device may alternatively be of another type other than that in the scenario.

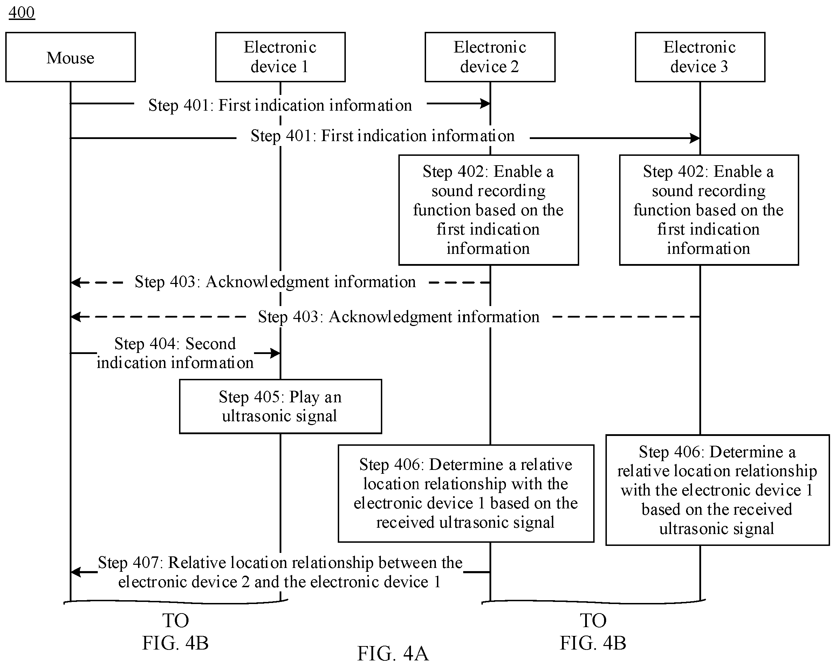

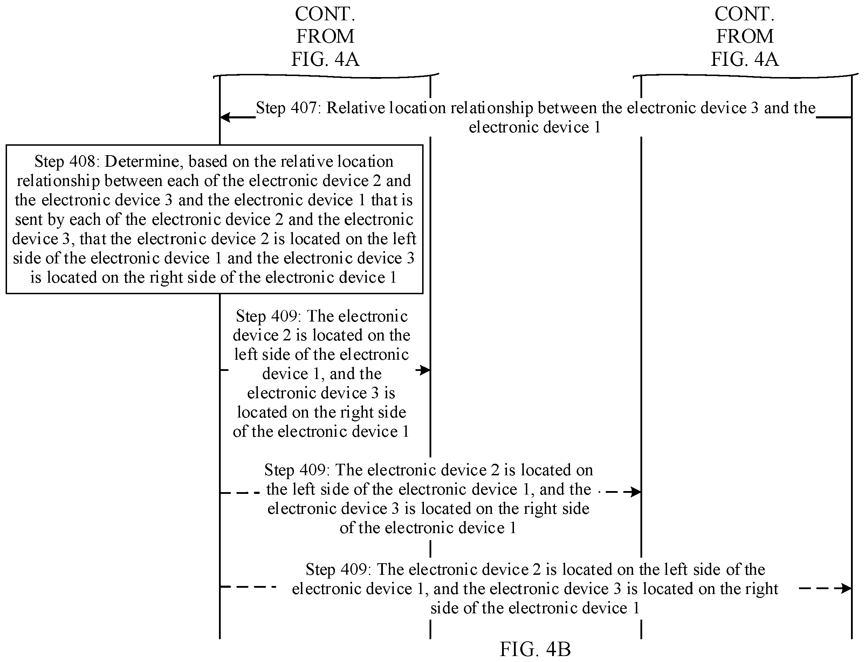

With reference to the scenario shown in FIG. 3, the following describes an example location identification method provided in embodiments of this application by using an example in which the mouse determines the relative location relationship between every two of the electronic device 1, the electronic device 2, and the electronic device 3. FIG. 4A and FIG. 4B are an interaction flowchart of a location identification method 400. It should be noted that, in the method 400, the mouse corresponds to a first electronic device, the electronic device 1 corresponds to a third electronic device, and the electronic device 2 and the electronic device 3 are respectively in a one-to-one correspondence with two second electronic devices.

Step 401: The mouse separately sends first indication information to the electronic device 2 and the electronic device 3, to indicate the electronic device 2 and the electronic device 3 to respectively enable respective sound recording functions.

For example, a user may trigger the mouse to perform a location identification procedure.

For example, a physical button may be embedded into the mouse. After the physical button is pressed, the mouse starts to perform the location identification procedure. For example, after the physical button is pressed, a transmitter in the mouse is triggered to separately send, to the electronic device 1, the electronic device 2, and the electronic device 3 based on the short-range communication connection established between the mouse and each of the electronic device 1, the electronic device 2, and the electronic device 3, instructions indicating to start the location identification procedure. After receiving the instructions indicating to start the location identification procedure, the electronic device 1, the electronic device 2, and the electronic device 3 separately return, to the mouse based on short-range communication connections established with the mouse, acknowledgment (Ack) messages to indicate that the electronic device 1, the electronic device 2, and the electronic device 3 agree to start to perform the location identification procedure. After receiving the acknowledgment messages from the electronic device 1, the electronic device 2, and the electronic device 3, the mouse may start to perform the location identification procedure.

After the location identification procedure is started, the mouse separately sends the first indication information to the electronic device 2 and the electronic device 3, to indicate the electronic device 2 and the electronic device 3 to respectively enable respective sound recording functions. For example, the mouse separately sends the first indication information to the electronic device 2 and the electronic device 3 based on the short-range communication connections established between the mouse and each of the electronic device 2 and the electronic device 3.

Step 402: The electronic device 2 and the electronic device 3 enable respective sound recording functions based on the respectively received first indication information.

After the mouse sends the first indication information to the electronic device 2 and the electronic device 3, in an implementation, the mouse may directly perform step 404: The mouse sends second indication information to the electronic device 1, to indicate the electronic device 1 to play an ultrasonic signal. For example, the mouse sends the second indication information to the electronic device 1 based on a short-range communication connection established between the mouse and the electronic device 1.

In another implementation, after the mouse sends the first indication information to the electronic device 2 and the electronic device 3, if the mouse receives acknowledgment messages, for example, Ack messages, from the electronic device 2 and the electronic device 3, the mouse performs step 404. The acknowledgment messages from the electronic device 2 and the electronic device 3 are responses respectively made by the electronic device 2 and the electronic device 3 for the first indication information. In this case, before step 404, the method 400 may further include step 403: After enabling the sound recording functions of the electronic device 2 and the electronic device 3, the electronic device 2 and the electronic device 3 send the acknowledgment messages to the mouse, to notify the mouse that the sound recording functions of the electronic device 2 and the electronic device 3 are enabled.

After receiving the second indication information, the electronic device 1 performs step 405: Play the ultrasonic signal.

Because respective sound recording functions are enabled on the electronic device 2 and the electronic device 3, after the electronic device 1 plays the ultrasonic signal, the ultrasonic signal is received by the electronic device 2 and the electronic device 3. Then, the electronic device 2 and the electronic device 3 may perform step 406: The electronic device 2 and the electronic device 3 each determine a relative location relationship between each of the electronic device 2 and the electronic device 3 and the electronic device 1 based on the received ultrasonic signal.

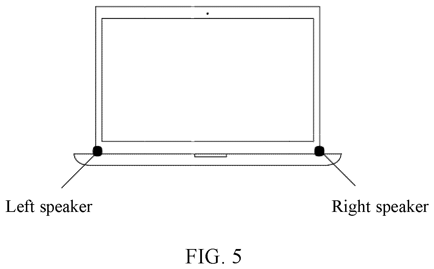

For example, the electronic device 1 plays the ultrasonic signal via a left speaker and a right speaker. A distribution status of the left speaker and the right speaker on the electronic device 1 may be shown in FIG. 5. The electronic device 2 and the electronic device 3 each may determine the relative location relationship between each of the electronic device 2 and the electronic device 3 and the electronic device 1 based on a difference between moments at which two ultrasonic signals are received.

To enable a device receiving an ultrasonic signal to distinguish, based on the received ultrasonic signal, whether the ultrasonic signal is from a left speaker or a right speaker, a device playing the ultrasonic signal plays the ultrasonic signals alternately via the left speaker and the right speaker. In addition, an ultrasonic signal from the left speaker and an ultrasonic signal from the right speaker are distinguished based on a signal feature. The device playing the ultrasonic signal sends an ultrasonic signal with a progressively decreasing frequency via the left speaker, and sends an ultrasonic signal with a progressively increasing frequency via the right speaker, so that the device receiving the ultrasonic signal can distinguish the ultrasonic signal from the left speaker and the ultrasonic signal from the right speaker in the two received ultrasonic signals. The following uses the electronic device 2 as an example to describe a method for determining a relative location relationship between the electronic device 2 and the electronic device 1 based on two received ultrasonic signals.

For example, the electronic device 1 first plays, via the left speaker, an ultrasonic signal s₁ with a progressively decreasing frequency within duration T₁ corresponding to a moment t₁ to a moment t₂, and then plays, after duration T₂ starting from the moment t₂ via the right speaker, an ultrasonic signal s₂ with a progressively increasing frequency within duration T₃ corresponding to a moment t₃ to a moment t₄.

After receiving the ultrasonic signal s₁ from the left speaker of the electronic device 1 and the ultrasonic signal s₂ from the right speaker of the electronic device 1, the electronic device 2 determines, based on a moment t₅ at which the ultrasonic signal s₁ played by the left speaker of the electronic device 1 arrives at a sound recording module of the electronic device 2 and a moment t₆ at which the ultrasonic signal s₂ played by the right speaker of the electronic device 1 arrives at the sound recording module of the electronic device 2, a time difference between the arrival moments, namely, t₆-t₅-(T₁+T₂).

If t₆-t₅-(T₁+T₂) is greater than 0, it indicates that the ultrasonic signal s₁ from the left speaker of the electronic device 1 arrives at the sound recording module of the electronic device 2 earlier, and it further indicates that the electronic device 2 is located on the left side of the electronic device 1. Alternatively, if t₆-t₅-(T₁+T₂) is less than 0, it indicates that the ultrasonic signal s₂ from the right speaker of the electronic device 1 arrives at the sound recording module of the electronic device 2 earlier, and it further indicates that the electronic device 2 is located on the right side of the electronic device 1.

In the scenario shown in FIG. 3, the electronic device 2 determines that t₆-t₅-(T₁+T₂) is greater than 0, and then the electronic device 2 may further determine that the electronic device 2 is located on the left side of the electronic device 1.

Correspondingly, the electronic device 3 may determine that the electronic device 3 is located on the right side of the electronic device 1. For a method for determining a relative location relationship between the electronic device 3 and the electronic device 1, refer to the foregoing related descriptions. For brevity, details are not described herein again. It should be noted that, for an electronic device that has a display function and that is provided in embodiments of this application, a distribution status of a left speaker and a right speaker on the electronic device may be shown in FIG. 5. For brevity, the following does not describe the distribution status of the left speaker and the right speaker on the electronic device that has the display function.

It should be noted that, for a value of 1₆-t₅-(T₁+T₂), in addition to the foregoing two cases in which the value is greater than 0 or less than 0, there may be a case in which the value is equal to 0. When the electronic device 2 determines that t₆-t₅-(T₁+T₂) is equal to 0, it indicates that the electronic device 2 is located in the front or rear of the electronic device 1. In this case, the electronic device 2 may prompt the user to adjust a placement location, so that the user adjusts a placement location of a related electronic device based on the prompt from the electronic device 2. In this way, a front/rear relative location relationship is adjusted to a left/right relative location relationship.

It should be understood that the ultrasonic signal is merely used as an example, and does not constitute a limitation on embodiments of this application. For example, during specific implementation, any audio signal that is outside a human hearing range should fall within the protection scope of embodiments of this application.

After determining the relative location relationship between each of the electronic device 2 and the electronic device 3 and the electronic device 1, the electronic device 2 and the electronic device 3 may perform step 407: The electronic device 2 and the electronic device 3 send the relative location relationship between each of the electronic device 2 and the electronic device 3 and the electronic device 1 to the mouse.

Step 408: The mouse determines, based on the relative location relationship between each of the electronic device 2 and the electronic device 3 and the electronic device 1 that is sent by each of the electronic device 2 and the electronic device 3, that the electronic device 2 is located on the left side of the electronic device 1 and the electronic device 3 is located on the right side of the electronic device 1.

After determining that the electronic device 2 is located on the left side of the electronic device 1 and the electronic device 3 is located on the right side of the electronic device 1, the mouse obtains a relative location relationship between every two of the electronic device 1, the electronic device 2, and the electronic device 3. In this case, to enable a cursor to freely switch between the electronic device 1, the electronic device 2, and the electronic device 3, the mouse further needs to notify each device of the relative location relationship between every two of the electronic device 1, the electronic device 2, and the electronic device 3. In this case, the method 400 further includes step 409: The mouse separately sends, to the electronic device 1, the electronic device 2, and the electronic device 3, the relative location relationship between every two of the electronic device 1, the electronic device 2, and the electronic device 3. For example, the mouse separately sends, to the electronic device 1, the electronic device 2, and the electronic device 3, relationships that the electronic device 2 is located on the left side of the electronic device 1 and the electronic device 3 is located on the right side of the electronic device 1.

After the electronic device 1, the electronic device 2, and the electronic device 3 obtain the relative location relationship between every two of the electronic device 1, the electronic device 2, and the electronic device 3, free switching of the mouse between the electronic device 1, the electronic device 2, and the electronic device 3 may be supported.

For example, it is assumed that the cursor of the mouse is currently located on the electronic device 1. When the user needs to make the cursor appear on the electronic device 2, the user may control, by using the mouse, the cursor to move in a direction close to the electronic device 2, that is, control, by using the mouse, the cursor to move toward a left boundary of a display interface of the electronic device 1. When the cursor moves to the left boundary of the electronic device 1, if the user controls, by using the mouse, the cursor to continue to move leftward, the cursor appears on the electronic device 2. When the user needs to make the cursor appear on the electronic device 3, the user may control, by using the mouse, the cursor to move in a direction close to the electronic device 3, that is, control, by using the mouse, the cursor to move toward a right boundary of the display interface of the electronic device 1. When the cursor moves to the right boundary of the electronic device 1, if the cursor is controlled by using the mouse to continue to move rightward, the cursor appears on the electronic device 3.

It should be noted that, in the method 400, the location identification method provided in embodiments of this application is described by using an example in which the electronic device 1 is used as a device for playing an ultrasonic signal, and the electronic device 2 and the electronic device 3 are used as devices for receiving the ultrasonic signal. However, this does not constitute a limitation on embodiments of this application. For example, during specific implementation, any one of the electronic device 1, the electronic device 2, and the electronic device 3 may be used as the device for playing the ultrasonic signal, and the other two devices are used as devices for receiving the ultrasonic signal. This is not limited in embodiments of this application. For example, the device for playing the ultrasonic signal may be a device that is the first to establish a short-range communication connection to the mouse.

It should be noted that in the method 400, that the sound recording functions of the electronic device 2 and the electronic device 3 are enabled based on the first indication information is merely used as an example for description. However, this does not constitute a limitation on embodiments of this application. For example, during specific implementation, the sound recording functions of the electronic device 2 and the electronic device 3 may be always in an enabled state. In this case, the mouse may not perform step 401 and step 402 in the method 400.

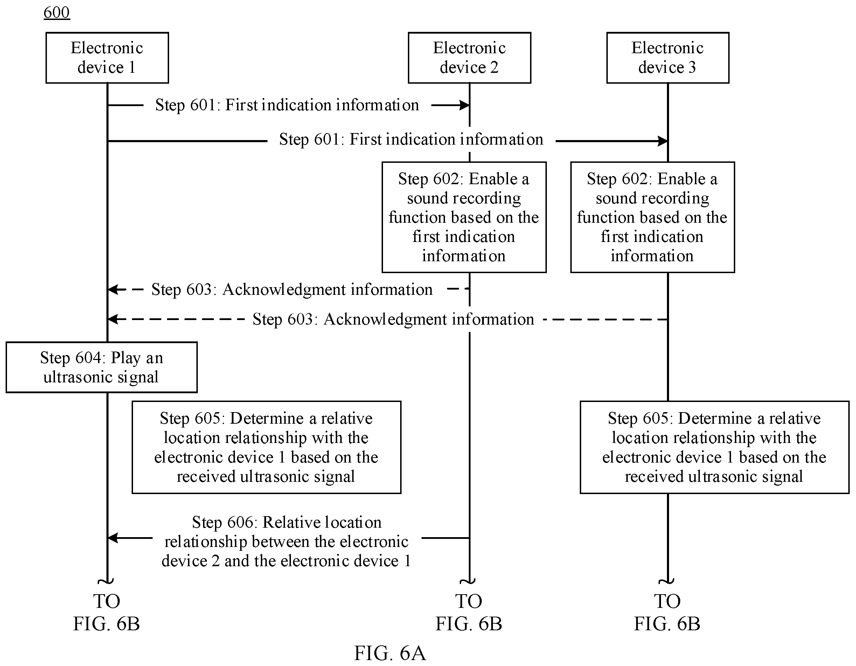

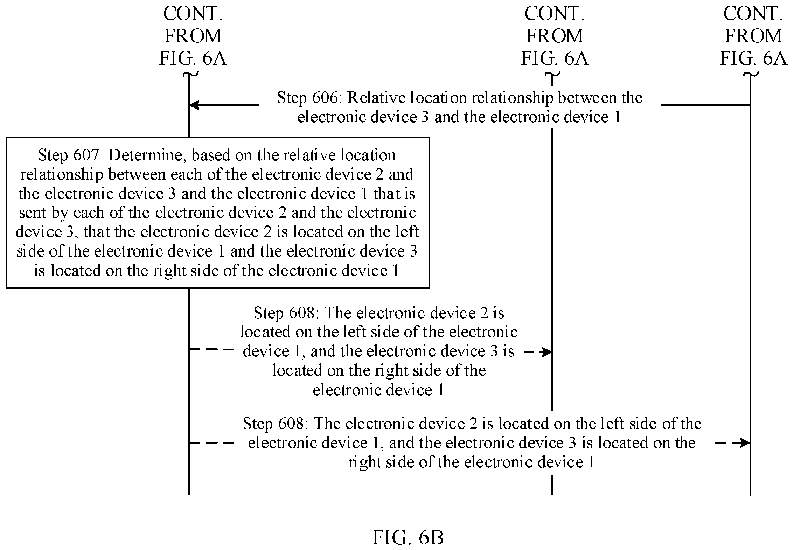

Still with reference to the scenario shown in FIG. 3, the following describes another example location identification method provided in embodiments of this application by using an example in which one of the electronic device 1, the electronic device 2, and the electronic device 3 determines a relative location relationship between every two of the electronic device 1, the electronic device 2, and the electronic device 3. FIG. 6A and FIG. 6B are an interaction flowchart of a location identification method 600. It should be noted that, in the method 600, the electronic device 1 corresponds to a third electronic device, and the electronic device 2 and the electronic device 3 are respectively in a one-to-one correspondence with two second electronic devices.

An electronic device configured to determine the relative location relationship between every two of the electronic device 1, the electronic device 2, and the electronic device 3 may be selected by a user from the electronic device 1, the electronic device 2, and the electronic device 3. In other words, any one of the electronic device 1, the electronic device 2, and the electronic device 3 may be selected by the user as the electronic device configured to determine the relative location relationship between every two of the electronic device 1, the electronic device 2, and the electronic device 3.

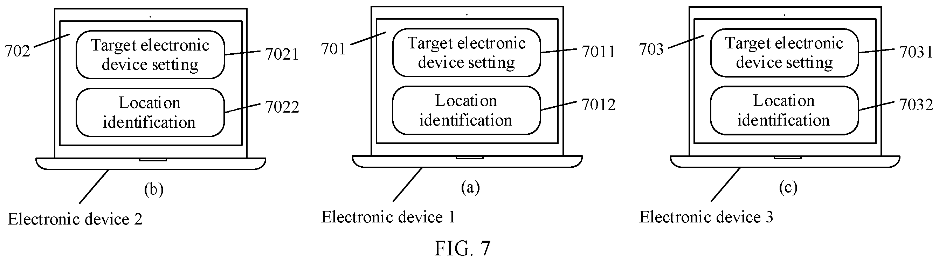

For example, an application that has a location identification function may be installed on the electronic device 1, the electronic device 2, and the electronic device 3. The user may separately start the application on the electronic device 1, the electronic device 2, and the electronic device 3. For example, the user may tap an icon of the application to start the application. After the application is started, the electronic device 1 enters a display interface 701 shown in (a) in FIG. 7, the electronic device 2 enters a display interface 702 shown in (b) in FIG. 7, and the electronic device 3 enters a display interface 703 shown in (c) in FIG. 7. The user may perform an operation on the display interface 701, the display interface 702, or the display interface 703 provided by the electronic device 1, the electronic device 2, or the electronic device 3, to select the electronic device configured to determine the relative location relationship between every two of the electronic device 1, the electronic device 2, and the electronic device 3.

For example, when the user selects the electronic device 1 to determine the relative location relationship between every two of the electronic device 1, the electronic device 2, and the electronic device 3, the user may select a target electronic device setting option 7011 in the display interface 701. When the user selects the electronic device 2 to determine the relative location relationship between every two of the electronic device 1, the electronic device 2, and the electronic device 3, the user may select a target electronic device setting option 7021 in the display interface 702. When the user selects the electronic device 3 to determine the relative location relationship between every two of the electronic device 1, the electronic device 2, and the electronic device 3, the user may select a target electronic device setting option 7031 in the display interface 703. It should be noted that the target electronic device is an electronic device that is in the electronic device 1, the electronic device 2, and the electronic device 3 and that is configured to determine the relative location relationship between every two of the electronic device 1, the electronic device 2, and the electronic device 3.

After selecting the electronic device configured to determine the relative location relationship between every two of the electronic device 1, the electronic device 2, and the electronic device 3, the user may trigger start of a location identification procedure.

It is assumed that the user selects the electronic device 1 as the electronic device configured to determine the relative location relationship between every two of the electronic device 1, the electronic device 2, and the electronic device 3. For example, the user selects the target electronic device setting option 7011 in the display interface 701 of the electronic device 1, and the electronic device 1 determines, based on the detected operation of selecting the target electronic device setting option 7011 in the display interface 701, that the electronic device 1 is the electronic device configured to determine the relative location relationship between every two of the electronic device 1, the electronic device 2, and the electronic device 3.

After the electronic device 1 is used as the electronic device configured to determine the relative location relationship between every two of the electronic device 1, the electronic device 2, and the electronic device 3, the user may select a location identification option 7012 in the display interface 701 of the electronic device 1, to trigger start of the location identification procedure. Correspondingly, the electronic device 1 starts the location identification procedure based on a detected operation that the location identification option 7012 is selected.

After the location identification procedure is started, the electronic device 1 may perform the following steps:
Step 601: The electronic device 1 separately sends first indication information to the electronic device 2 and the electronic device 3, to indicate the electronic device 2 and the electronic device 3 to respectively enable respective sound recording functions.

After the location identification procedure is started, the electronic device 1 separately sends the first indication information to the electronic device 2 and the electronic device 3, to indicate the electronic device 2 and the electronic device 3 to respectively enable respective sound recording functions. For example, the electronic device 1 separately sends the first indication information to the electronic device 2 and the electronic device 3 based on short-range communication connections established between the electronic device 1 and the electronic device 2 and the electronic device 3.

Step 602: The electronic device 2 and the electronic device 3 enable respective sound recording functions based on the respectively received first indication information.

After the electronic device 1 sends the first indication information to the electronic device 2 and the electronic device 3, in an implementation, after sending the first indication information to the electronic device 2 and the electronic device 3, the electronic device 1 may directly perform step 604: The electronic device 1 plays an ultrasonic signal. For a specific description of the ultrasonic signal, refer to the related description of the method 400. For brevity, details are not described herein again.

In another implementation, after the electronic device 1 sends the first indication information to the electronic device 2 and the electronic device 3, if the electronic device 1 receives acknowledgment messages from the electronic device 2 and the electronic device 3, the electronic device 1 performs step 604. The acknowledgment messages from the electronic device 2 and the electronic device 3 are responses respectively made by the electronic device 2 and the electronic device 3 for the first indication information. In this case, before step 604, the method 600 may further include step 603: After enabling the sound recording functions of the electronic device 2 and the electronic device 3, the electronic device 2 and the electronic device 3 send acknowledgment messages to the electronic device 1, to notify the electronic device 1 that the sound recording functions of the electronic device 2 and the electronic device 3 are enabled.

Because respective sound recording functions are enabled on the electronic device 2 and the electronic device 3, after the electronic device 1 plays the ultrasonic signal, the ultrasonic signal is received by the electronic device 2 and the electronic device 3. Then, the electronic device 2 and the electronic device 3 may perform step 605: The electronic device 2 and the electronic device 3 each determine a relative location relationship between each of the electronic device 2 and the electronic device 3 and the electronic device 1 based on the received ultrasonic signal. For a specific method for determining, respectively by the electronic device 2 and the electronic device 3, the relative location relationship between each of the electronic device 2 and the electronic device 3 and the electronic device 1 based on the received ultrasonic signal, refer to the related descriptions of the method 400. For brevity, details are not described herein again.

After determining the relative location relationship between each of the electronic device 2 and the electronic device 3 and the electronic device 1, the electronic device 2 and the electronic device 3 may perform step 606: The electronic device 2 and the electronic device 3 send the relative location relationship between each of the electronic device 2 and the electronic device 3 and the electronic device 1 to the electronic device 1.

Step 607: The electronic device 1 determines, based on the relative location relationship between each of the electronic device 2 and the electronic device 3 and the electronic device 1 that is sent by each of the electronic device 2 and the electronic device 3, that the electronic device 2 is located on the left side of the electronic device 1 and the electronic device 3 is located on the right side of the electronic device 1.

After determining that the electronic device 2 is located on the left side of the electronic device 1 and the electronic device 3 is located on the right side of the electronic device 1, the electronic device 1 obtains a relative location relationship between every two of the electronic device 1, the electronic device 2, and the electronic device 3. In this case, to enable a cursor to freely switch between the electronic device 1, the electronic device 2, and the electronic device 3, the electronic device 1 further needs to notify the electronic device 2 and the electronic device 3 of the relative location relationship between every two of the electronic device 1, the electronic device 2, and the electronic device 3. In this case, the method 600 further includes step 608: The electronic device 1 separately sends, to the electronic device 2 and the electronic device 3, the relative location relationship between every two of the electronic device 1, the electronic device 2, and the electronic device 3. For example, the electronic device 1 separately sends, to the electronic device 2 and the electronic device 3, relationships that the electronic device 2 is located on the left side of the electronic device 1 and the electronic device 3 is located on the right side of the electronic device 1.

After the electronic device 1, the electronic device 2, and the electronic device 3 obtain the relative location relationship between every two of the electronic device 1, the electronic device 2, and the electronic device 3, free switching of the cursor between the electronic device 1, the electronic device 2, and the electronic device 3 may be supported. For an example in which the cursor freely switches between the electronic device 1, the electronic device 2, and the electronic device 3, refer to the related descriptions of the method 400. For brevity, details are not described herein again.

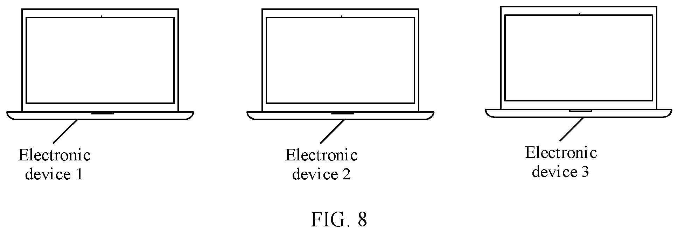

FIG. 8 shows another application scenario of the location identification method according to an embodiment of this application. FIG. 8 shows three electronic devices. For ease of description, the three electronic devices are respectively denoted as an electronic device 1, an electronic device 2, and an electronic device 3. In an implementation, a mouse provided in embodiments of this application may determine a relative location relationship between every two of the electronic device 1, the electronic device 2, and the electronic device 3. In another implementation, one of the electronic device 1, the electronic device 2, and the electronic device 3 may determine a relative location relationship between every two of the electronic device 1, the electronic device 2, and the electronic device 3.

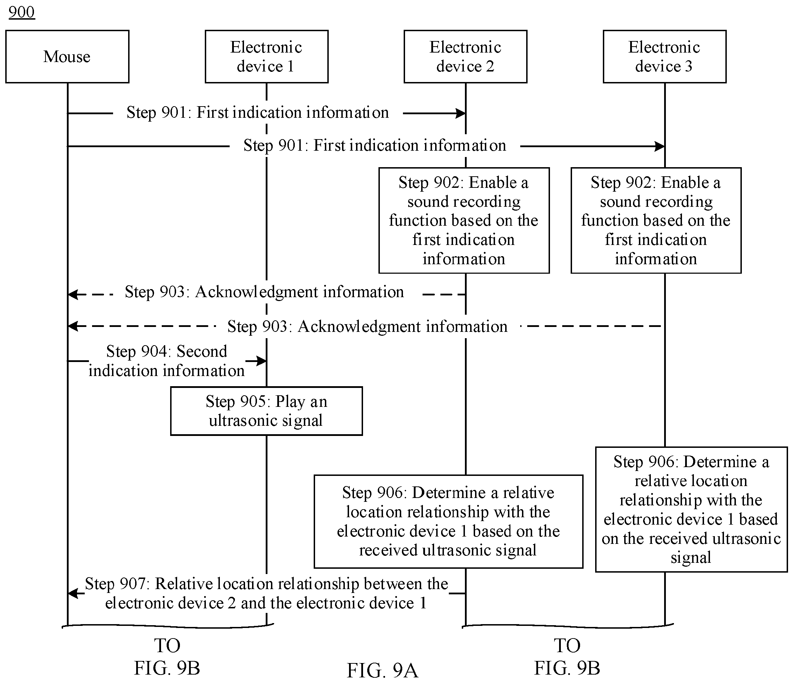

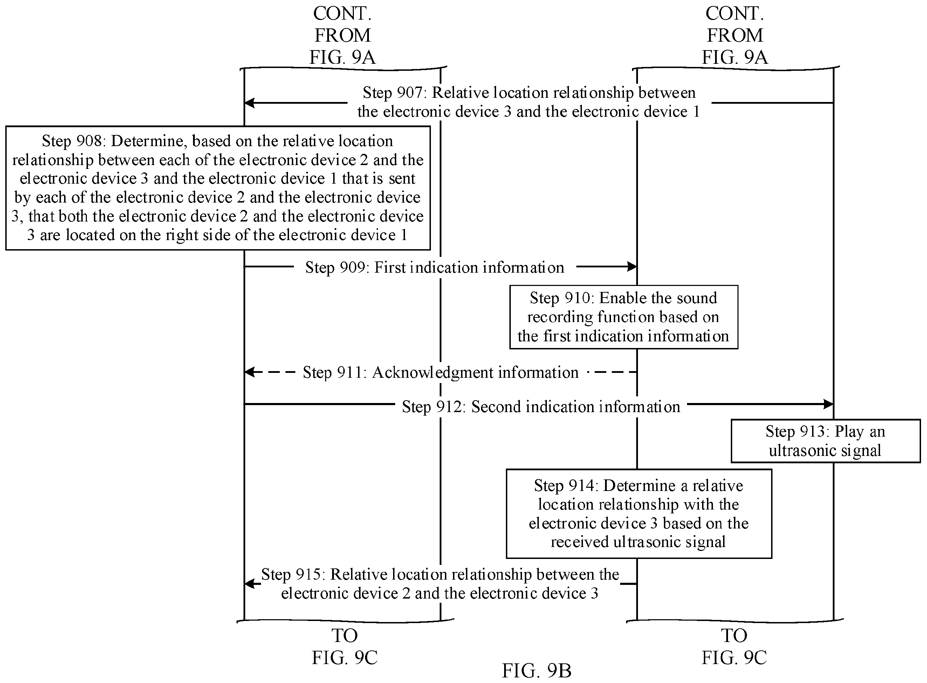

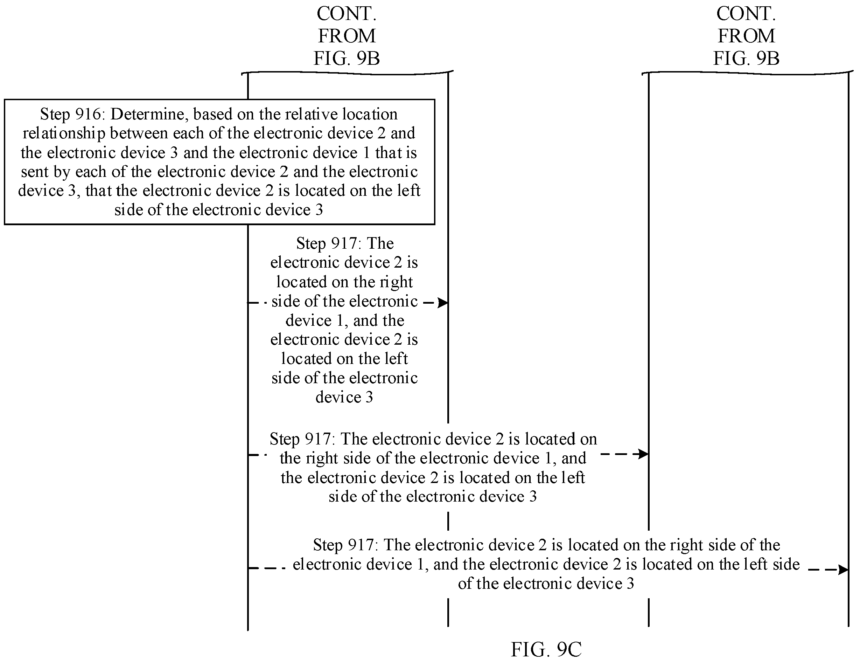

With reference to the scenario shown in FIG. 8, the following describes an example location identification method provided in embodiments of this application by using an example in which the mouse determines the relative location relationship between every two of the electronic device 1, the electronic device 2, and the electronic device 3. FIG. 9A to FIG. 9C are an interaction flowchart of a location identification method 900. It should be noted that, in the method 900, the mouse corresponds to a first electronic device, the electronic device 1 corresponds to a third electronic device, and the electronic device 2 and the electronic device 3 are respectively in a one-to-one correspondence with two second electronic devices.

Step 901: The mouse separately sends first indication information to the electronic device 2 and the electronic device 3, to indicate the electronic device 2 and the electronic device 3 to respectively enable respective sound recording functions. For a specific implementation of step 901, refer to the related descriptions of step 401. For brevity, details are not described herein again.

Step 902: The electronic device 2 and the electronic device 3 enable respective sound recording functions based on the respectively received first indication information.

Step 903: After enabling respective sound recording functions, the electronic device 2 and the electronic device 3 send acknowledgment messages to the mouse, to indicate that the sound recording functions of the electronic device 2 and the electronic device 3 are enabled.

Step 904: The mouse sends second indication information to the electronic device 1, to indicate the electronic device 1 to play an ultrasonic signal. For example, the mouse sends the first indication information to the electronic device 1 based on a short-range communication connection established between the mouse and the electronic device 1. For a specific implementation of step 902 to step 904, refer to the related descriptions of step 402 to step 404. For brevity, details are not described herein again.

After receiving the second indication information, the electronic device 1 performs step 905: The electronic device 1 plays the ultrasonic signal. For a specific implementation of step 905, refer to the related descriptions of step 405. For brevity, details are not described herein again.

Step 906: The electronic device 2 and the electronic device 3 respectively determine a relative location relationship between each of the electronic device 2 and the electronic device 3 and the electronic device 1 based on the received ultrasonic signal.

With reference to the scenario shown in FIG. 8, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. For a specific method for determining, by the electronic device 2 and the electronic device 3, the relative location relationship between each of the electronic device 2 and the electronic device 3 and the electronic device 1, refer to the related descriptions of the method 400. For brevity, details are not described herein again.

After determining the relative location relationship between each of the electronic device 2 and the electronic device 3 and the electronic device 1, the electronic device 2 and the electronic device 3 may perform step 907: The electronic device 2 and the electronic device 3 send the relative location relationship between each of the electronic device 2 and the electronic device 3 and the electronic device 1 to the mouse.

Step 908: The mouse determines, based on the relative location relationship between each of the electronic device 2 and the electronic device 3 and the electronic device 1 that is sent by each of the electronic device 2 and the electronic device 3, that both the electronic device 2 and the electronic device 3 are located on a same side of the electronic device 1, for example, both are located on the right side of the electronic device 1.

Because both the electronic device 2 and the electronic device 3 are located on the right side of the electronic device 1, to obtain a relative location relationship between every two of the electronic device 1, the electronic device 2, and the electronic device 3, the mouse further needs to determine a relative location relationship between the electronic device 2 and the electronic device 3. In this case, the method 900 may further include the following steps:
Step 909: The mouse sends the first indication information to the electronic device 2, where the first indication information indicates the electronic device 2 to enable the sound recording function.
Step 910: The electronic device 2 enables the sound recording function based on the first indication information.

In an implementation, after sending the first indication information to the electronic device 2, the mouse may perform step 912: The mouse sends the second indication information to the electronic device 3, to indicate the electronic device 3 to play the ultrasonic signal. For example, the mouse sends the second indication information to the electronic device 3 based on a short-range communication connection established between the mouse and the electronic device 3.

In another implementation, after the mouse sends the first indication information to the electronic device 2, if the mouse receives the acknowledgment message from the electronic device 2, the mouse performs step 912. The acknowledgment message from the electronic device 2 is a response made by the electronic device 2 for the first indication information. In this case, before step 912, the method 900 may further include step 911: After enabling the sound recording function of the electronic device 2, the electronic device 2 sends the acknowledgment message to the mouse, to notify the mouse that the sound recording function of the electronic device 2 is enabled.

After receiving the second indication information, the electronic device 3 performs step 913: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 914: The electronic device 2 determines the relative location relationship with the electronic device 3 based on the received ultrasonic signal.

With reference to the scenario shown in FIG. 8, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 915: The electronic device 2 sends the relative location relationship between the electronic device 2 and the electronic device 3 to the mouse.

Step 916: The mouse determines, based on the relative location relationship between each of the electronic device 2 and the electronic device 3 and the electronic device 1 that is sent by each of the electronic device 2 and the electronic device 3, that the electronic device 2 is located on the left side of the electronic device 3.

After determining that the electronic device 2 is located on the left side of the electronic device 3, based on step 908, the mouse may determine that the electronic device 2 is located on the right side of the electronic device 1, and the electronic device 2 is located on the left side of the electronic device 3. In this case, to enable a cursor to freely switch between the electronic device 1, the electronic device 2, and the electronic device 3, the mouse further needs to notify each device of the relative location relationship between every two of the electronic device 1, the electronic device 2, and the electronic device 3. In this case, the method 900 further includes step 917: The mouse separately sends, to the electronic device 1, the electronic device 2, and the electronic device 3, the relative location relationship between every two of the electronic device 1, the electronic device 2, and the electronic device 3. For example, the mouse separately sends, to the electronic device 1, the electronic device 2, and the electronic device 3, relationships that the electronic device 2 is located on the right side of the electronic device 1 and the electronic device 2 is located on the left side of the electronic device 3.

After the electronic device 1, the electronic device 2, and the electronic device 3 obtain the relative location relationship between every two of the electronic device 1, the electronic device 2, and the electronic device 3, free switching of the cursor between the electronic device 1, the electronic device 2, and the electronic device 3 may be supported. For an example in which the cursor freely switches between the electronic device 1, the electronic device 2, and the electronic device 3, refer to the related descriptions of the method 400. For brevity, details are not described herein again.

It should be understood that the foregoing describes the method for determining the relative location relationship between the electronic device 2 and the electronic device 3 by using only an example in which the electronic device 2 enables the sound recording function and the electronic device 3 plays the ultrasonic signal. However, this does not constitute a limitation on embodiments of this application. For example, during specific implementation, the mouse may indicate the electronic device 3 to enable a sound recording function, and indicate the electronic device 2 to play an ultrasonic signal.

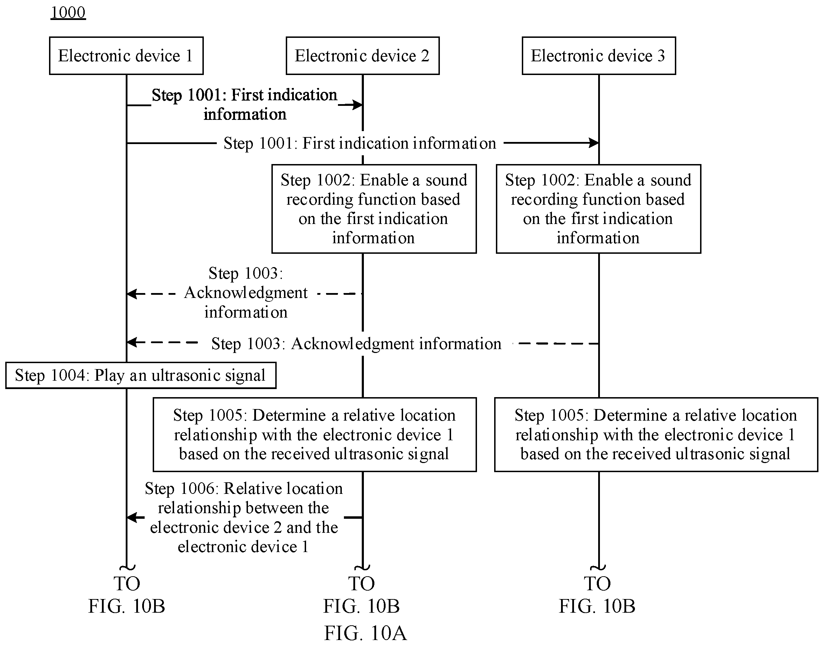

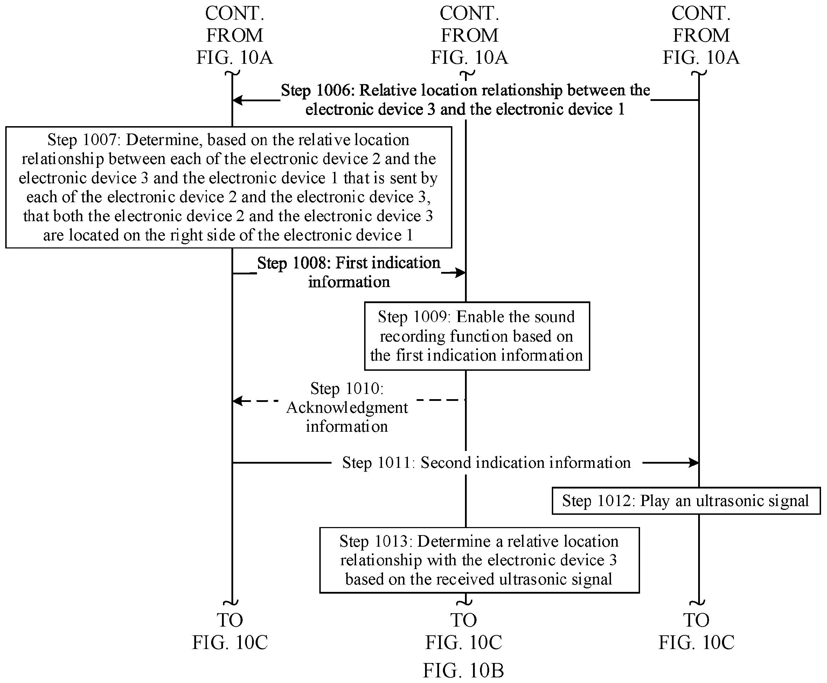

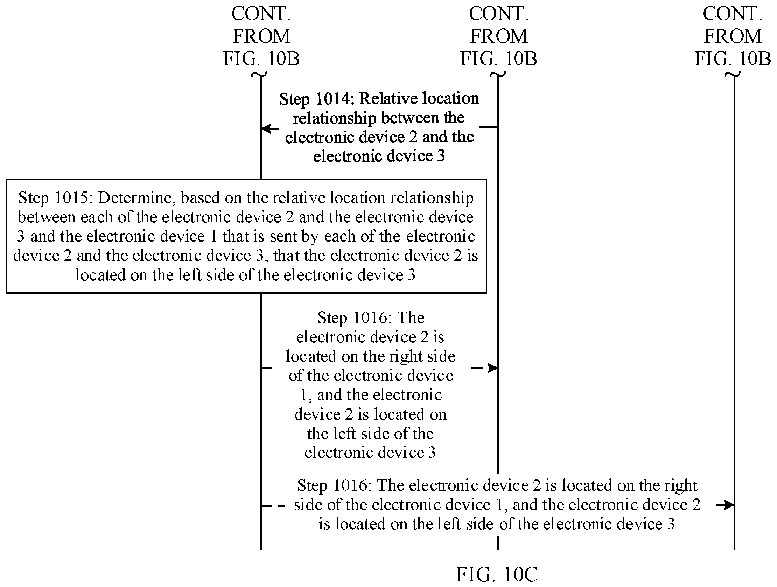

Still with reference to the scenario shown in FIG. 8, the following describes still another example location identification method provided in embodiments of this application by using an example in which one of the electronic device 1, the electronic device 2, and the electronic device 3 determines the relative location relationship between every two of the electronic device 1, the electronic device 2, and the electronic device 3. FIG. 10A to FIG. 10C are an interaction flowchart of a location identification method 1000. It should be noted that, in the method 1000, the electronic device 1 corresponds to a third electronic device, and the electronic device 2 and the electronic device 3 are respectively in a one-to-one correspondence with two second electronic devices.

An electronic device configured to determine the relative location relationship between every two of the electronic device 1, the electronic device 2, and the electronic device 3 may be selected by the user from the electronic device 1, the electronic device 2, and the electronic device 3. In other words, any one of the electronic device 1, the electronic device 2, and the electronic device 3 may be selected by the user as the electronic device configured to determine the relative location relationship between every two of the electronic device 1, the electronic device 2, and the electronic device 3.

It is assumed that the user selects the electronic device 1 as the electronic device configured to determine the relative location relationship between every two of the electronic device 1, the electronic device 2, and the electronic device 3. After the electronic device configured to determine the relative location relationship between every two of the electronic device 1, the electronic device 2, and the electronic device 3 is selected, and a short-range communication connection is established between any one of the electronic device 1, the electronic device 2, and the electronic device 3 and the other two devices, the user may trigger start of the location identification procedure. For a specific implementation of selecting, by the user, the electronic device configured to determine the relative location relationship between every two of the electronic device 1, the electronic device 2, and the electronic device 3, a specific implementation of establishing the short-range communication connection between any one of the electronic device 1, the electronic device 2, and the electronic device 3 and the other two devices, and a specific implementation of triggering, by the user, start of the location identification procedure, refer to the related descriptions of the method 600. For brevity, details are not described herein again.

After the location identification procedure is started, the electronic device 1 may perform the following steps:
Step 1001: The electronic device 1 separately sends first indication information to the electronic device 2 and the electronic device 3, to indicate the electronic device 2 and the electronic device 3 to respectively enable respective sound recording functions. For a specific implementation of step 1001, refer to the related descriptions of step 601. For brevity, details are not described herein again.
Step 1002: The electronic device 2 and the electronic device 3 enable respective sound recording functions based on the respectively received first indication information.
Step 1003: After enabling respective sound recording functions of the electronic device 2 and the electronic device 3, the electronic device 2 and the electronic device 3 send acknowledgment messages to the electronic device 1, to notify the electronic device 1 that the sound recording functions of the electronic device 2 and the electronic device 3 are enabled.
Step 1004: The electronic device 1 plays an ultrasonic signal. For a specific implementation of step 1002 to step 1004, refer to the related descriptions of step 602 to step 604. For brevity, details are not described herein again.

Because respective sound recording functions are enabled on the electronic device 2 and the electronic device 3, after the electronic device 1 plays the ultrasonic signal, the ultrasonic signal is received by the electronic device 2 and the electronic device 3. Then, the electronic device 2 and the electronic device 3 may perform step 1005: The electronic device 2 and the electronic device 3 each determine a relative location relationship between each of the electronic device 2 and the electronic device 3 and the electronic device 1 based on the received ultrasonic signal.

With reference to the scenario shown in FIG. 8, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. For a specific method for determining, by the electronic device 2 and the electronic device 3, the relative location relationship between each of the electronic device 2 and the electronic device 3 and the electronic device 1, refer to the related descriptions of the method 400. For brevity, details are not described herein again.

After determining the relative location relationship between each of the electronic device 2 and the electronic device 3 and the electronic device 1, the electronic device 2 and the electronic device 3 may perform step 1006: The electronic device 2 and the electronic device 3 send the relative location relationship between each of the electronic device 2 and the electronic device 3 and the electronic device 1 to the electronic device 1.

Step 1007: The electronic device 1 determines, based on the relative location relationship between each of the electronic device 2 and the electronic device 3 and the electronic device 1 that is sent by each of the electronic device 2 and the electronic device 3, that both the electronic device 2 and the electronic device 3 are located on a same side of the electronic device 1, for example, both are located on the right side of the electronic device 1.

Because both the electronic device 2 and the electronic device 3 are located on the right side of the electronic device 1, to obtain a relative location relationship between every two of the electronic device 1, the electronic device 2, and the electronic device 3, the electronic device 1 further needs to determine a relative location relationship between the electronic device 2 and the electronic device 3. In this case, the method 1000 may further include the following steps:
Step 1008: The electronic device 1 sends the first indication information to the electronic device 2, where the first indication information indicates the electronic device 2 to enable the sound recording function.
Step 1009: The electronic device 2 enables the sound recording function based on the first indication information.

In an implementation, after sending the first indication information to the electronic device 2, the electronic device 1 may perform step 1011: The electronic device 1 sends second indication information to the electronic device 3, to indicate the electronic device 3 to play the ultrasonic signal. For example, the electronic device 1 sends the second indication information to the electronic device 3 based on a short-range communication connection established between the electronic device 1 and the electronic device 3.

In another implementation, after the electronic device 1 sends the first indication information to the electronic device 2, if the electronic device 1 receives the acknowledgment message from the electronic device 2, the electronic device 1 performs step 1011. The acknowledgment message from the electronic device 2 is a response made by the electronic device 2 for the first indication information. In this case, before step 1011, the method 1000 may further include step 1010: After enabling the sound recording function of the electronic device 2, the electronic device 2 sends the acknowledgment message to the electronic device 1, to notify the electronic device 1 that the sound recording function of the electronic device 2 is enabled.

After receiving the second indication information, the electronic device 3 performs step 1012: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 1013: The electronic device 2 determines the relative location relationship with the electronic device 3 based on the received ultrasonic signal.

With reference to the scenario shown in FIG. 8, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 1014: The electronic device 2 sends the relative location relationship between the electronic device 2 and the electronic device 3 to the electronic device 1.

Step 1015: The electronic device 1 determines, based on the relative location relationship between each of the electronic device 2 and the electronic device 3 and the electronic device 1 that is sent by each of the electronic device 2 and the electronic device 3, that the electronic device 2 is located on the left side of the electronic device 3.

After determining that the electronic device 2 is located on the left side of the electronic device 3, based on step 1007, the electronic device 1 may determine that the electronic device 2 is located on the right side of the electronic device 1, and the electronic device 2 is located on the left side of the electronic device 3. In this case, to enable a cursor to freely switch between the electronic device 1, the electronic device 2, and the electronic device 3, the electronic device 1 further needs to notify the electronic device 2 and the electronic device 3 of the relative location relationship between every two of the electronic device 1, the electronic device 2, and the electronic device 3. In this case, the method 1000 further includes step 1016: The electronic device 1 separately sends, to the electronic device 2 and the electronic device 3, the relative location relationship between every two of the electronic device 1, the electronic device 2, and the electronic device 3. For example, the electronic device 1 separately sends, to the electronic device 2 and the electronic device 3, relationships that the electronic device 2 is located on the right side of the electronic device 1 and the electronic device 2 is located on the left side of the electronic device 3.

After the electronic device 1, the electronic device 2, and the electronic device 3 obtain the relative location relationship between every two of the electronic device 1, the electronic device 2, and the electronic device 3, free switching of the cursor between the electronic device 1, the electronic device 2, and the electronic device 3 may be supported. For an example in which the cursor freely switches between the electronic device 1, the electronic device 2, and the electronic device 3, refer to the related descriptions of the method 400. For brevity, details are not described herein again.

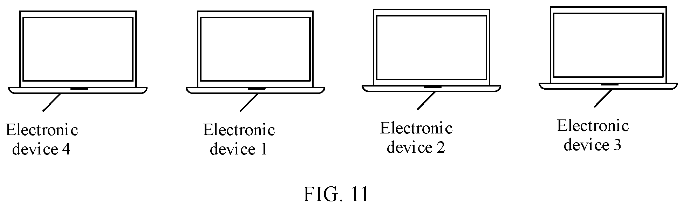

FIG. 11 shows still another application scenario of a location identification method according to an embodiment of this application. FIG. 11 shows four electronic devices. For ease of description, the four electronic devices are respectively denoted as an electronic device 1, an electronic device 2, an electronic device 3, and an electronic device 4. In an implementation, a mouse provided in embodiments of this application may determine a relative location relationship between every two of the electronic device 1, the electronic device 2, the electronic device 3, and the electronic device 4. In another implementation, one of the electronic device 1, the electronic device 2, the electronic device 3, and the electronic device 4 may determine a relative location relationship between every two of the electronic device 1, the electronic device 2, the electronic device 3, and the electronic device 4.

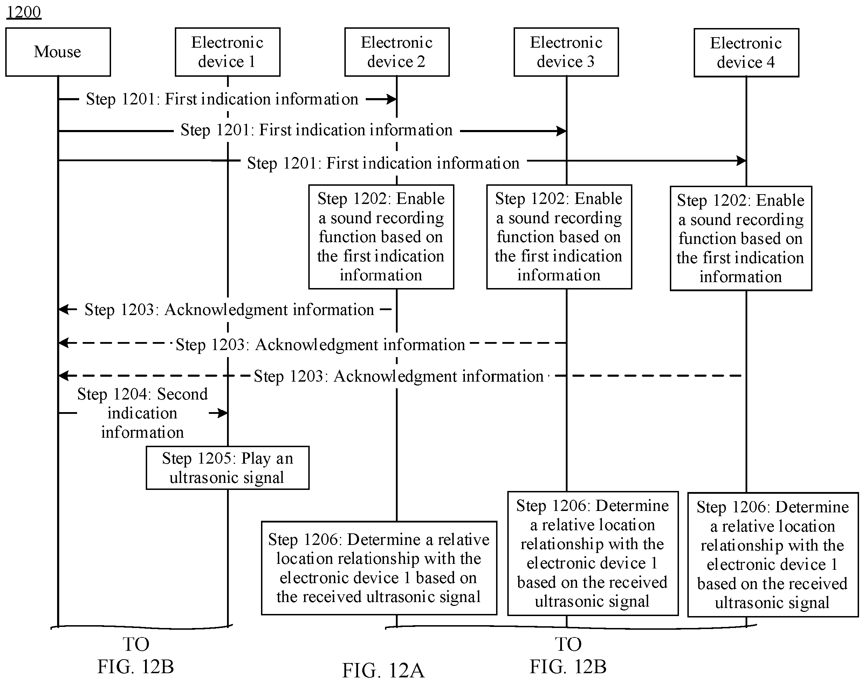

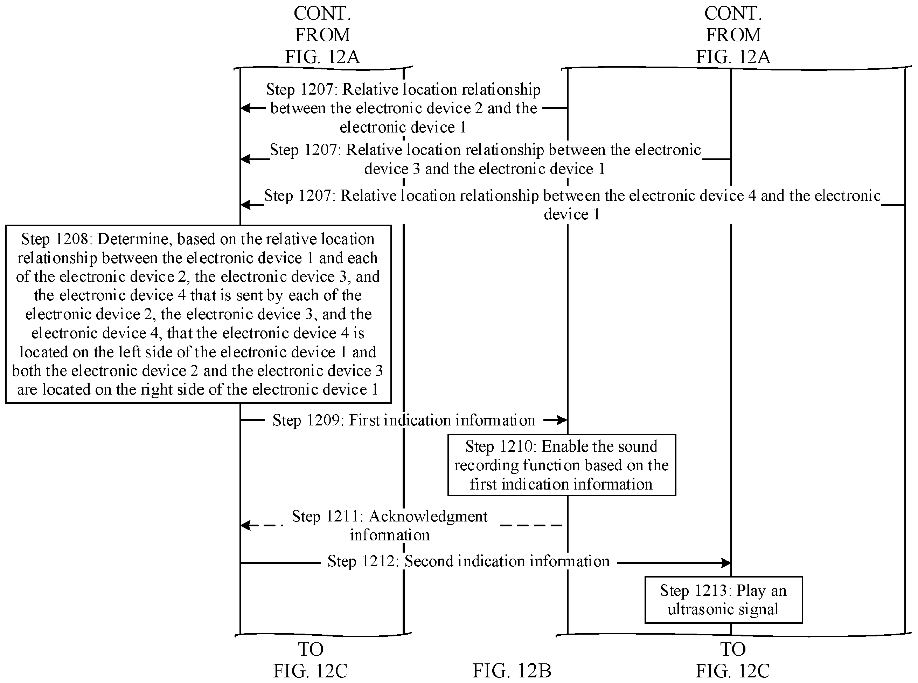

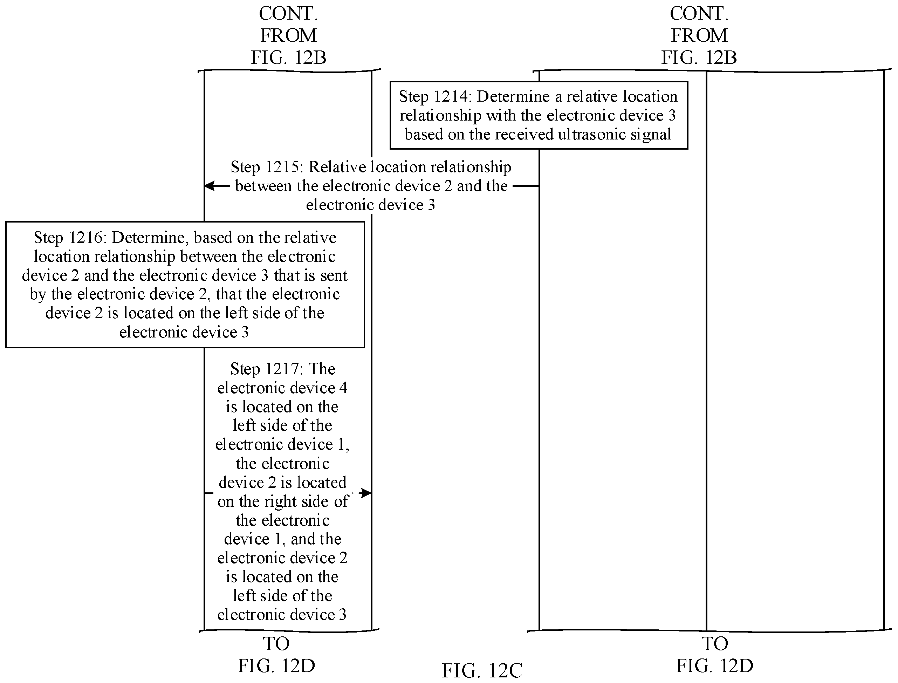

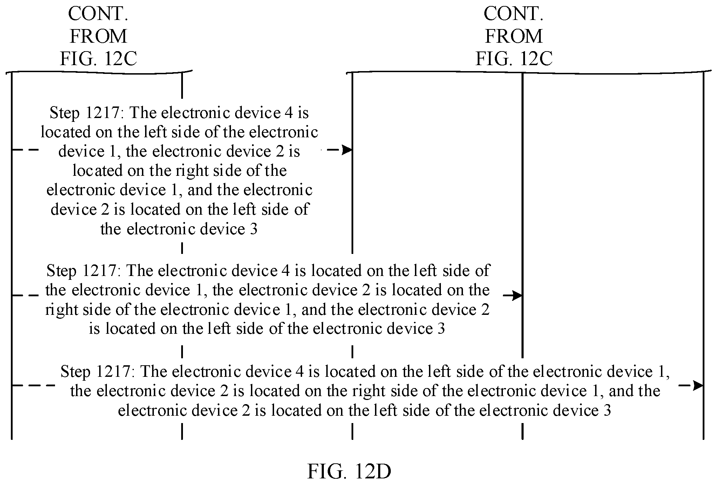

With reference to the scenario shown in FIG. 11, the following describes still another example location identification method provided in embodiments of this application by using an example in which the mouse determines the relative location relationship between every two of the electronic device 1, the electronic device 2, the electronic device 3, and the electronic device 4. FIG. 12A to FIG. 12D are an interaction flowchart of a location identification method 1200. It should be noted that, in the method 1200, the mouse corresponds to a first electronic device, the electronic device 1 corresponds to a third electronic device, and the electronic device 2, the electronic device 3, and the electronic device 4 are respectively in a one-to-one correspondence with three second electronic devices.

Step 1201: The mouse separately sends first indication information to the electronic device 2, the electronic device 3, and the electronic device 4, to indicate the electronic device 2, the electronic device 3, and the electronic device 4 to respectively enable respective sound recording functions.

Before determining the relative location relationship between every two of the electronic device 1, the electronic device 2, the electronic device 3, and the electronic device 4, the mouse needs to separately establish a short-range communication connection to the electronic device 1, the electronic device 2, the electronic device 3, and the electronic device 4, for example, establish a Bluetooth connection, to communicate with the electronic device 1, the electronic device 2, the electronic device 3, and the electronic device 4 in a process of determining the relative location relationship between every two of the electronic device 1, the electronic device 2, the electronic device 3, and the electronic device 4.

After the short-range communication connections are separately established between the mouse and the electronic device 1, the electronic device 2, the electronic device 3, and the electronic device 4, the mouse may be triggered to perform a location identification procedure. For a specific method for triggering the mouse to perform the identification procedure, refer to the related descriptions of the method 400. For brevity, details are not described herein again.

After the location identification procedure starts, the mouse may separately send the first indication information to the electronic device 2, the electronic device 3, and the electronic device 4 based on the short-range communication connections established between the mouse and the electronic device 2, the electronic device 3, and the electronic device 4, to indicate the electronic device 2, the electronic device 3, and the electronic device 4 to respectively enable respective sound recording functions.

Step 1202: The electronic device 2, the electronic device 3, and the electronic device 4 enable respective sound recording functions based on the respectively received first indication information.

After the mouse sends the first indication information to the electronic device 2, the electronic device 3, and the electronic device 4, in an implementation, after sending the first indication information to the electronic device 2, the electronic device 3, and the electronic device 4, the mouse may directly perform step 1204: The mouse sends second indication information to the electronic device 1, to indicate the electronic device 1 to play an ultrasonic signal, for example, sends the second indication information to the electronic device 1 based on a short-range communication connection established between the mouse and the electronic device 1.

In another implementation, after the mouse sends the first indication information to the electronic device 2, the electronic device 3, and the electronic device 4, if the mouse receives acknowledgment messages from the electronic device 2, the electronic device 3, and the electronic device 4, the mouse performs step 1204. The acknowledgment messages from the electronic device 2, the electronic device 3, and the electronic device 4 are responses respectively made by the electronic device 2, the electronic device 3, and the electronic device 4 for the first indication information. In this case, before step 1204, the method 1200 may further include step 1203: After enabling respective sound recording functions, the electronic device 2, the electronic device 3, and the electronic device 4 send the acknowledgment messages to the mouse, to notify the mouse that the sound recording functions of the electronic device 2, the electronic device 3, and the electronic device 4 are enabled.

After receiving the second indication information, the electronic device 1 performs step 1205: Play the ultrasonic signal.

Because respective sound recording functions are enabled on the electronic device 2, the electronic device 3, and the electronic device 4, after the electronic device 1 plays the ultrasonic signal, the ultrasonic signal is received by the electronic device 2, the electronic device 3, and the electronic device 4. Then, the electronic device 2, the electronic device 3, and the electronic device 4 may perform step 1206: The electronic device 2, the electronic device 3, and the electronic device 4 each determine a relative location relationship between the electronic device 1 and each of the electronic device 2, the electronic device 3, and the electronic device 4 based on the received ultrasonic signal.

With reference to the scenario shown in FIG. 11, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. Correspondingly, after receiving two ultrasonic signals, the electronic device 4 may determine, based on a difference between moments at which the two ultrasonic signals arrive at a sound recording module of the electronic device 4, that an ultrasonic signal that arrives at the sound recording module of the electronic device 4 earlier is an ultrasonic signal output by a left speaker of the electronic device 1. On the basis of this, the electronic device 4 may determine that the electronic device 4 is located on the left side of the electronic device 1. For a specific method for determining, by the electronic device 2, the electronic device 3, and the electronic device 4, the relative location relationship between the electronic device 1 and each of the electronic device 2, the electronic device 3, and the electronic device 4, refer to the related descriptions of the method 400. For brevity, details are not described herein again.

After determining the relative location relationship between the electronic device 1 and each of the electronic device 2, the electronic device 3, and the electronic device 4, the electronic device 2, the electronic device 3, and the electronic device 4 may perform step 1207: The electronic device 2, the electronic device 3, and the electronic device 4 send the relative location relationship between the electronic device 1 and each of the electronic device 2, the electronic device 3, and the electronic device 4 to the mouse.

Step 1208: The mouse determines, based on the relative location relationship between the electronic device 1 and each of the electronic device 2, the electronic device 3, and the electronic device 4 that is sent by each of the electronic device 2, the electronic device 3, and the electronic device 4, that both the electronic device 2 and the electronic device 3 are located on the right side of the electronic device 1 and the electronic device 4 is located on the left side of the electronic device 1.

Because both the electronic device 2 and the electronic device 3 are located on the right side of the electronic device 1, to obtain a relative location relationship between every two of the electronic device 1, the electronic device 2, the electronic device 3, and the electronic device 4, the mouse further needs to determine a relative location relationship between the electronic device 2 and the electronic device 3. In this case, the method 1200 may further include the following steps:
Step 1209: The mouse sends the first indication information to the electronic device 2, where the first indication information indicates the electronic device 2 to enable the sound recording function.
Step 1210: The electronic device 2 enables the sound recording function based on the first indication information.

In an implementation, after sending the first indication information to the electronic device 2, the mouse may perform step 1212: The mouse sends the second indication information to the electronic device 3, to indicate the electronic device 3 to play the ultrasonic signal. For example, the mouse sends the second indication information to the electronic device 3 based on a short-range communication connection established between the mouse and the electronic device 3.

In another implementation, after the mouse sends the first indication information to the electronic device 2, if the mouse receives the acknowledgment message from the electronic device 2, the mouse performs step 1212. The acknowledgment message from the electronic device 2 is a response made by the electronic device 2 for the first indication information. In this case, before step 1212, the method 1200 may further include step 1211: After enabling the sound recording function of the electronic device 2, the electronic device 2 sends the acknowledgment message to the mouse, to notify the mouse that the sound recording function of the electronic device 2 is enabled.

After receiving the second indication information, the electronic device 3 performs step 1213: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 1214: The electronic device 2 determines the relative location relationship with the electronic device 3 based on the received ultrasonic signal.

With reference to the scenario shown in FIG. 11, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 1215: The electronic device 2 sends the relative location relationship between the electronic device 2 and the electronic device 3 to the mouse.

Step 1216: The mouse determines, based on the relative location relationship between the electronic device 2 and the electronic device 3 that is sent by the electronic device 2, that the electronic device 2 is located on the left side of the electronic device 3.

After determining that the electronic device 2 is located on the left side of the electronic device 3, based on step 1208, the mouse may determine that the electronic device 4 is located on the left side of the electronic device 1, the electronic device 2 is located on the right side of the electronic device 1, and the electronic device 2 is located on the left side of the electronic device 3. In this case, to enable a cursor to freely switch between the electronic device 1, the electronic device 2, the electronic device 3, and the electronic device 4, the mouse further needs to notify each device of the relative location relationship between every two of the electronic device 1, the electronic device 2, the electronic device 3, and the electronic device 4. In this case, the method 1200 further includes step 1217: The mouse separately sends, to the electronic device 1, the electronic device 2, the electronic device 3, and the electronic device 4, the relative location relationship between every two of the electronic device 1, the electronic device 2, the electronic device 3, and the electronic device 4. For example, the mouse separately sends, to the electronic device 1, the electronic device 2, the electronic device 3, and the electronic device 4, relationships that the electronic device 4 is located on the left side of the electronic device 1, the electronic device 2 is located on the right side of the electronic device 1, and the electronic device 2 is located on the left side of the electronic device 3.

After the electronic device 1, the electronic device 2, the electronic device 3, and the electronic device 4 obtain the relative location relationship between every two of the electronic device 1, the electronic device 2, the electronic device 3, and the electronic device 4, free switching of the cursor between the electronic device 1, the electronic device 2, the electronic device 3, and the electronic device 4 may be supported. For an example in which the cursor freely switches between the electronic device 1, the electronic device 2, the electronic device 3, and the electronic device 4, refer to the related descriptions of the method 400. For brevity, details are not described herein again.

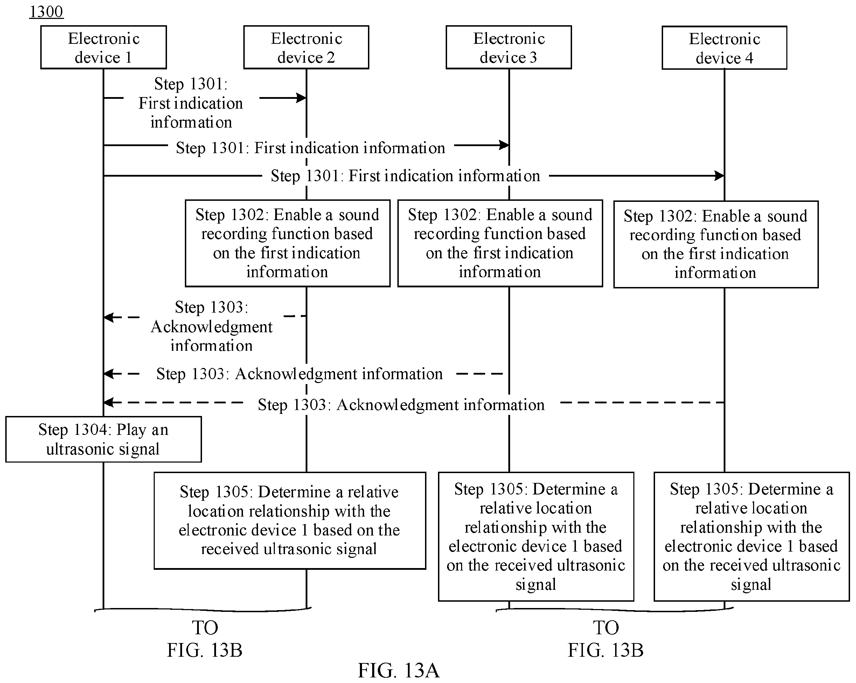

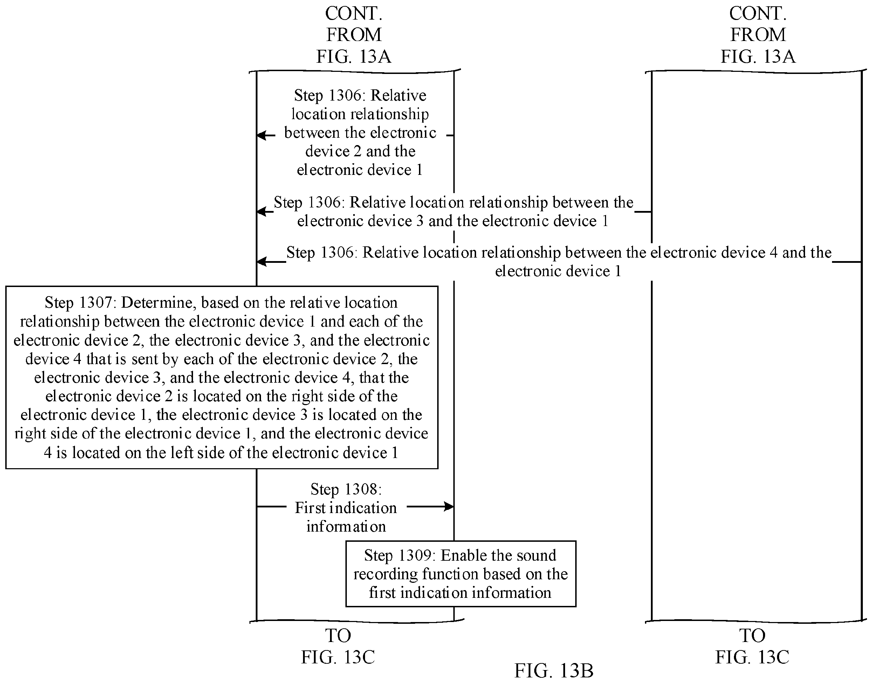

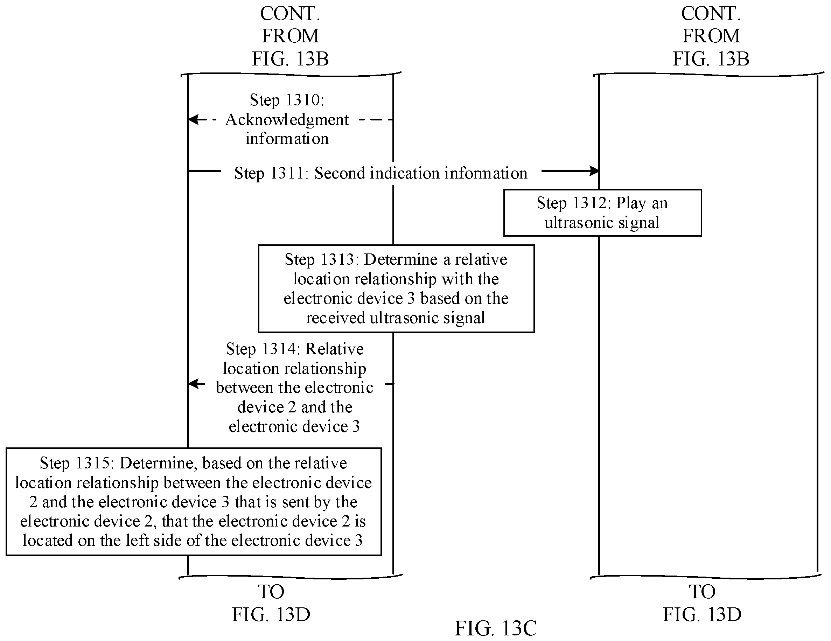

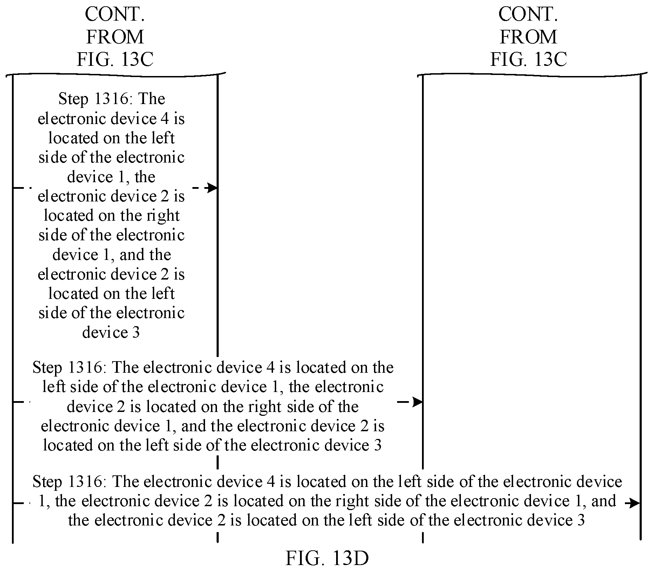

Still with reference to the scenario shown in FIG. 11, the following describes still another example location identification method provided in embodiments of this application by using an example in which one of the electronic device 1, the electronic device 2, the electronic device 3, and the electronic device 4 determines the relative location relationship between every two of the electronic device 1, the electronic device 2, the electronic device 3, and the electronic device 4. FIG. 13A to FIG. 13D are an interaction flowchart of a location identification method 1300. It should be noted that, in the method 1300, the electronic device 1 corresponds to a third electronic device, and the electronic device 2, the electronic device 3, and the electronic device 4 are respectively in a one-to-one correspondence with three second electronic devices.

An electronic device configured to determine the relative location relationship between every two of the electronic device 1, the electronic device 2, the electronic device 3, and the electronic device 4 may be selected by a user from the electronic device 1, the electronic device 2, the electronic device 3, and the electronic device 4. In other words, any one of the electronic device 1, the electronic device 2, the electronic device 3, and the electronic device 4 may be selected by the user as the electronic device configured to determine the relative location relationship between every two of the electronic device 1, the electronic device 2, the electronic device 3, and the electronic device 4.

It is assumed that the user selects the electronic device 1 as the electronic device configured to determine the relative location relationship between every two of the electronic device 1, the electronic device 2, the electronic device 3, and the electronic device 4. After the electronic device configured to determine the relative location relationship between every two of the electronic device 1, the electronic device 2, the electronic device 3, and the electronic device 4 is selected, and a short-range communication connection is established between any one of the electronic device 1, the electronic device 2, the electronic device 3, and the electronic device 4 and the other two devices, the user may trigger start of the location identification procedure. For a specific implementation of selecting, by the user, the electronic device configured to determine the relative location relationship between every two of the electronic device 1, the electronic device 2, the electronic device 3, and the electronic device 4, a specific implementation of establishing the short-range communication connection between any one of the electronic device 1, the electronic device 2, the electronic device 3, and the electronic device 4 and the other two devices, and a specific implementation of triggering, by the user, start of the location identification procedure, refer to the related descriptions of the method 600. For brevity, details are not described herein again.

After the location identification procedure is started, the electronic device 1 may perform the following steps:
Step 1301: The electronic device 1 separately sends first indication information to the electronic device 2, the electronic device 3, and the electronic device 4, to indicate the electronic device 2, the electronic device 3, and the electronic device 4 to respectively enable respective sound recording functions.

The electronic device 1 may separately send the first indication information to the electronic device 2, the electronic device 3, and the electronic device 4 based on the short-range communication connections established between the electronic device 1 and the electronic device 2, the electronic device 3, and the electronic device 4, to indicate the electronic device 2, the electronic device 3, and the electronic device 4 to respectively enable respective sound recording functions.

Step 1302: The electronic device 2, the electronic device 3, and the electronic device 4 enable respective sound recording functions based on the respectively received first indication information.

After the electronic device 1 sends the first indication information to the electronic device 2, the electronic device 3, and the electronic device 4, in an implementation, after sending the first indication information, the electronic device 1 may directly perform step 1304: The electronic device 1 plays an ultrasonic signal. For a specific description of the ultrasonic signal, refer to the related description of the method 400. For brevity, details are not described herein again.

In another implementation, after the electronic device 1 sends the first indication information to the electronic device 2, the electronic device 3, and the electronic device 4, if the electronic device 1 receives acknowledgment messages from the electronic device 2, the electronic device 3, and the electronic device 4, the electronic device 1 performs step 1304. The acknowledgment messages from the electronic device 2, the electronic device 3, and the electronic device 4 are responses respectively made by the electronic device 2, the electronic device 3, and the electronic device 4 for the first indication information. In this case, before step 1304, the method 1300 may further include step 1303: After enabling respective sound recording functions, the electronic device 2, the electronic device 3, and the electronic device 4 send acknowledgment messages to the electronic device 1, to notify the electronic device 1 that the sound recording functions of the electronic device 2, the electronic device 3, and the electronic device 4 are enabled.

Because respective sound recording functions are enabled on the electronic device 2, the electronic device 3, and the electronic device 4, after the electronic device 1 plays the ultrasonic signal, the ultrasonic signal is received by the electronic device 2, the electronic device 3, and the electronic device 4. Then, the electronic device 2, the electronic device 3, and the electronic device 4 may perform step 1305: The electronic device 2, the electronic device 3, and the electronic device 4 each determine a relative location relationship between the electronic device 1 and each of the electronic device 2, the electronic device 3, and the electronic device 4 based on the received ultrasonic signal.

With reference to the scenario shown in FIG. 11, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. Correspondingly, after receiving two ultrasonic signals, the electronic device 4 may determine, based on a difference between moments at which the two ultrasonic signals arrive at a sound recording module of the electronic device 4, that an ultrasonic signal that arrives at the sound recording module of the electronic device 4 earlier is an ultrasonic signal output by a left speaker of the electronic device 1. On the basis of this, the electronic device 4 may determine that the electronic device 4 is located on the left side of the electronic device 1. For a specific method for determining, by the electronic device 2, the electronic device 3, and the electronic device 4, the relative location relationship between the electronic device 1 and each of the electronic device 2, the electronic device 3, and the electronic device 4, refer to the related descriptions of the method 400. For brevity, details are not described herein again.

After determining the relative location relationship between the electronic device 1 and each of the electronic device 2, the electronic device 3, and the electronic device 4, the electronic device 2, the electronic device 3, and the electronic device 4 may perform step 1306: The electronic device 2, the electronic device 3, and the electronic device 4 send the relative location relationship between the electronic device 1 and each of the electronic device 2, the electronic device 3, and the electronic device 4 to the electronic device 1.

Step 1307: The electronic device 1 determines, based on the relative location relationship between the electronic device 1 and each of the electronic device 2, the electronic device 3, and the electronic device 4 that is sent by each of the electronic device 2, the electronic device 3, and the electronic device 4, that the electronic device 2 is located on the right side of the electronic device 1, the electronic device 3 is located on the right side of the electronic device 1, and the electronic device 4 is located on the left side of the electronic device 1.

Because both the electronic device 2 and the electronic device 3 are located on the right side of the electronic device 1, to obtain a relative location relationship between every two of the electronic device 1, the electronic device 2, and the electronic device 3, and the electronic device 4, the electronic device 1 further needs to determine a relative location relationship between the electronic device 2 and the electronic device 3. In this case, the method 1300 may further include the following steps:
Step 1308: The electronic device 1 sends the first indication information to the electronic device 2, where the first indication information indicates the electronic device 2 to enable the sound recording function.
Step 1309: The electronic device 2 enables the sound recording function based on the first indication information.

After the electronic device 1 sends the first indication information to the electronic device 2, in an implementation, after sending the first indication information to the electronic device 2, the electronic device 1 may directly perform step 1311: The electronic device 1 sends second indication information to the electronic device 3, to indicate the electronic device 3 to play the ultrasonic signal. For example, the electronic device 1 sends the second indication information to the electronic device 3 based on a short-range communication connection established between the electronic device 1 and the electronic device 3.

In another implementation, after the electronic device 1 sends the first indication information to the electronic device 2, if the electronic device 1 receives the acknowledgment message from the electronic device 2, the electronic device 1 performs step 1311. The acknowledgment message from the electronic device 2 is a response made by the electronic device 2 for the first indication information. In this case, before step 1311, the method 1300 may further include step 1310: After enabling the sound recording function of the electronic device 2, the electronic device 2 sends the acknowledgment message to the electronic device 1, to notify the electronic device 1 that the sound recording function of the electronic device 2 is enabled.

After receiving the second indication information, the electronic device 3 performs step 1312: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 1313: The electronic device 2 determines the relative location relationship with the electronic device 3 based on the received ultrasonic signal.

With reference to the scenario shown in FIG. 11, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 1314: The electronic device 2 sends the relative location relationship between the electronic device 2 and the electronic device 3 to the electronic device 1.

Step 1315: The electronic device 1 determines, based on the relative location relationship between the electronic device 2 and the electronic device 3 that is sent by the electronic device 2, that the electronic device 2 is located on the left side of the electronic device 3.

After determining that the electronic device 2 is located on the left side of the electronic device 3, based on step 1307, the electronic device 1 may determine that the electronic device 4 is located on the left side of the electronic device 1 and the electronic device 2 is located on the right side of the electronic device 1 the left side of the electronic device 3. In this case, to enable a cursor to freely switch between the electronic device 1, the electronic device 2, the electronic device 3, and the electronic device 4, the electronic device 1 further needs to notify the electronic device 2, the electronic device 3, and the electronic device 4 of the relative location relationship between every two of the electronic device 1, the electronic device 2, the electronic device 3, and the electronic device 4. In this case, the method 1300 further includes step 1316: The electronic device 1 sends, to the electronic device 2, the electronic device 3, and the electronic device 4, the relative location relationship between every two of the electronic device 1, the electronic device 2, the electronic device 3, and the electronic device 4. For example, the electronic device 1 separately sends, to the electronic device 2, the electronic device 3, and the electronic device 4, relationships that the electronic device 4 is located on the left side of the electronic device 1, the electronic device 2 is located on the right side of the electronic device 1, and the electronic device 2 is located on the left side of the electronic device 3.

After the electronic device 1, the electronic device 2, the electronic device 3, and electronic device 4 obtain the relative location relationship between every two of the electronic device 1, the electronic device 2, the electronic device 3, and the electronic device 4, free switching of the cursor between the electronic device 1, the electronic device 2, the electronic device 3, and the electronic device 4 may be supported. For an example in which the cursor freely switches between the electronic device 1, the electronic device 2, the electronic device 3, and the electronic device 4, refer to the related descriptions of the method 400. For brevity, details are not described herein again.

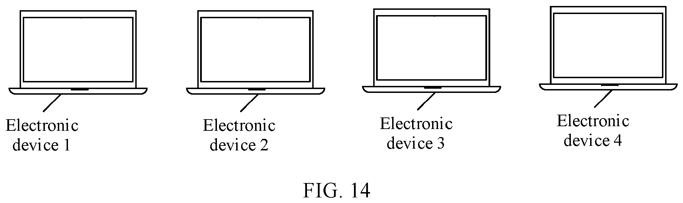

FIG. 14 shows still another application scenario of a location identification method according to an embodiment of this application. FIG. 14 shows four electronic devices. For ease of description, the four electronic devices are respectively denoted as an electronic device 1, an electronic device 2, an electronic device 3, and an electronic device 4. In an implementation, a mouse provided in embodiments of this application may determine a relative location relationship between every two of the electronic device 1, the electronic device 2, the electronic device 3, and the electronic device 4. In another implementation, one of the electronic device 1, the electronic device 2, the electronic device 3, and the electronic device 4 may determine a relative location relationship between every two of the electronic device 1, the electronic device 2, the electronic device 3, and the electronic device 4.

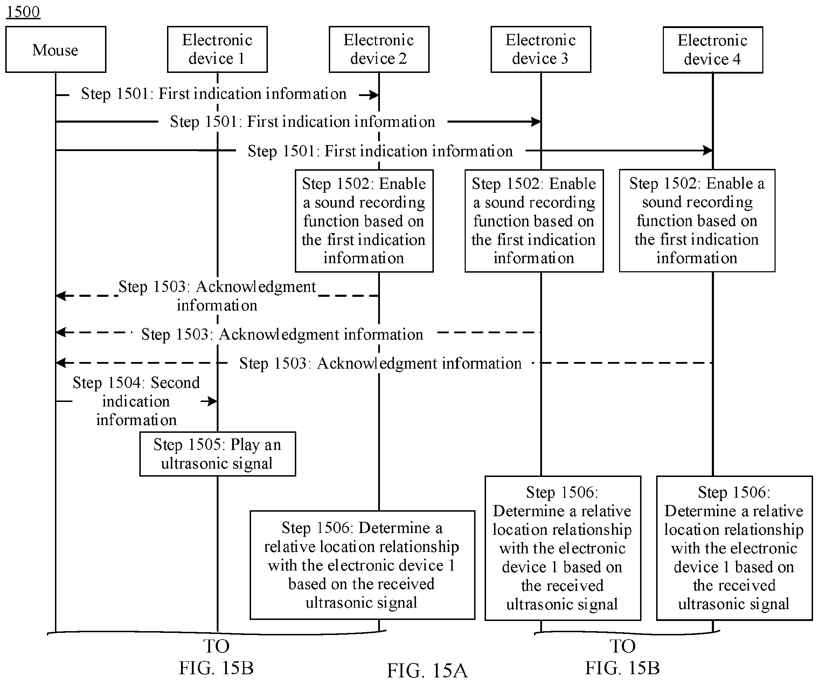

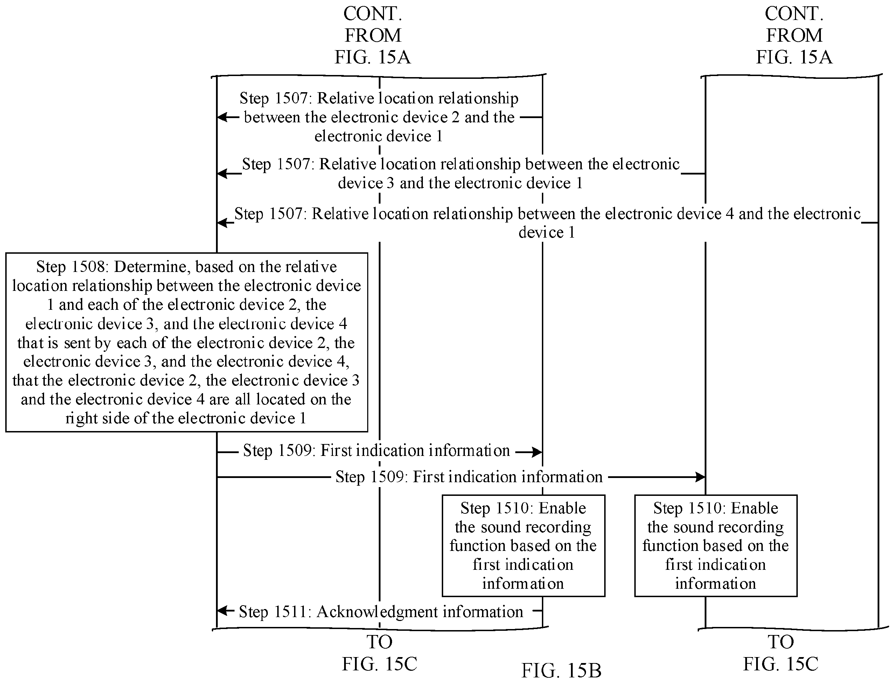

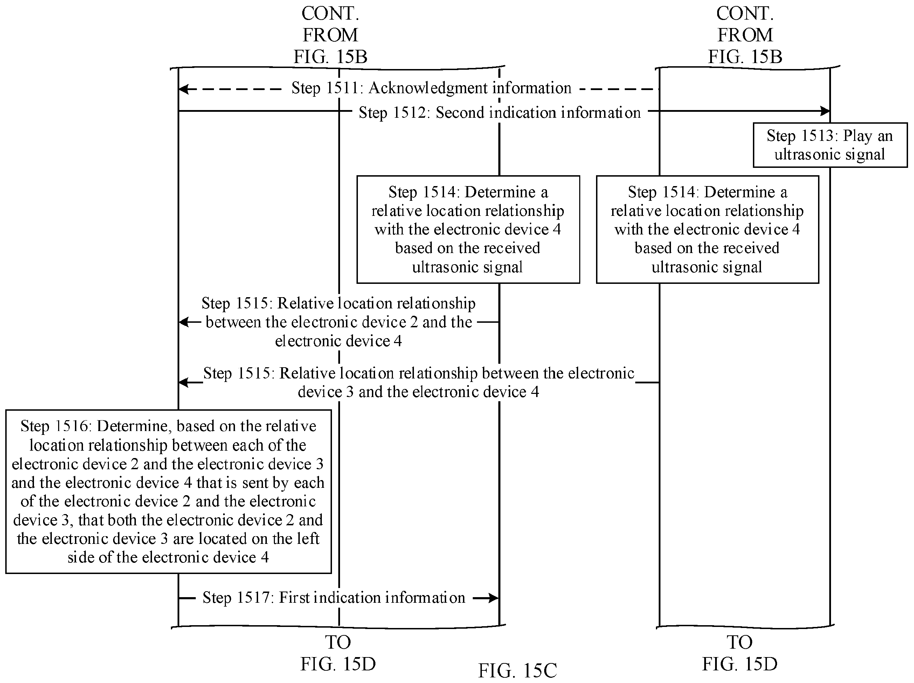

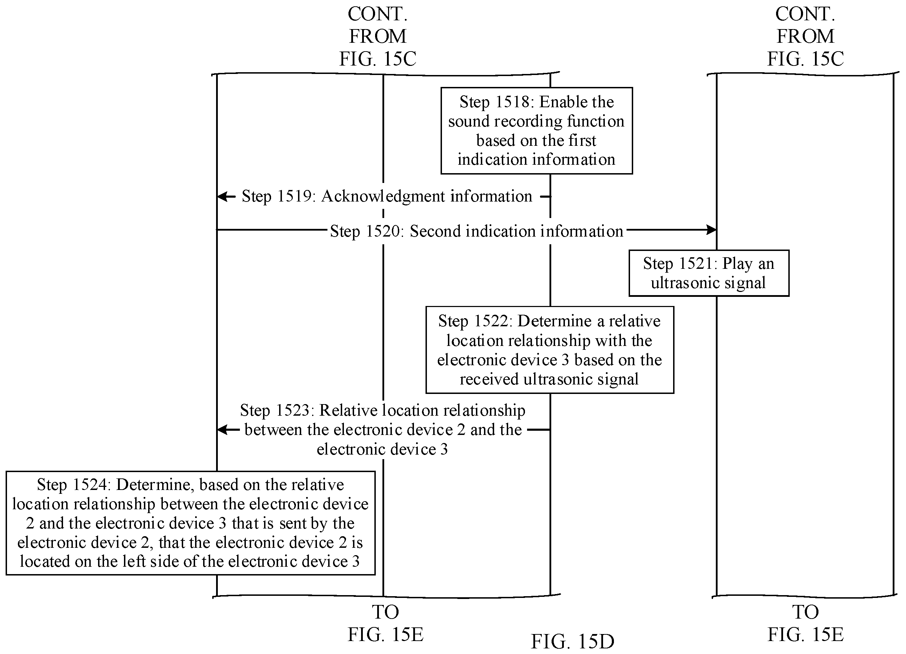

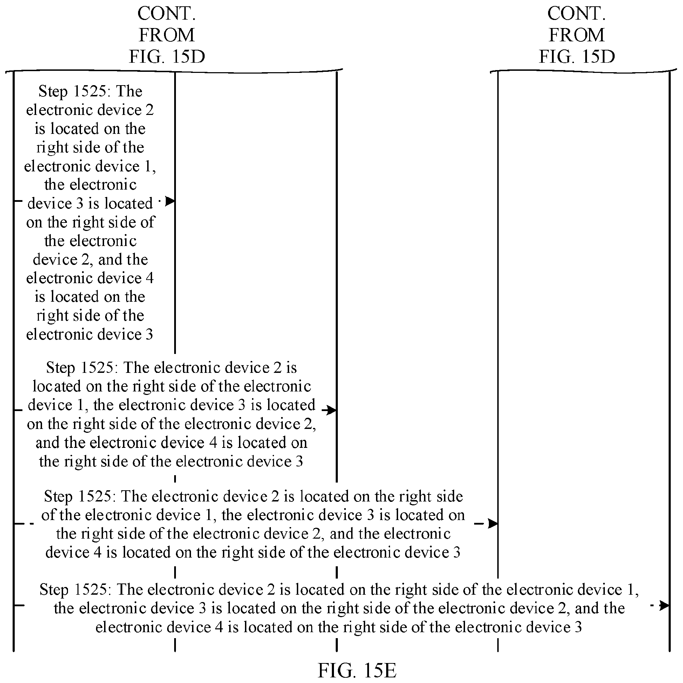

With reference to the scenario shown in FIG. 14, the following describes still another example location identification method provided in embodiments of this application by using an example in which the mouse determines the relative location relationship between every two of the electronic device 1, the electronic device 2, the electronic device 3, and the electronic device 4. FIG. 15A to FIG. 15E are an interaction flowchart of a location identification method 1500. It should be noted that, in the method 1500, the mouse corresponds to a first electronic device, the electronic device 1 corresponds to a third electronic device, and the electronic device 2, the electronic device 3, and the electronic device 4 are respectively in a one-to-one correspondence with three second electronic devices.

Step 1501: The mouse separately sends first indication information to the electronic device 2, the electronic device 3, and the electronic device 4, to indicate the electronic device 2, the electronic device 3, and the electronic device 4 to respectively enable respective sound recording functions.

Step 1502: The electronic device 2, the electronic device 3, and the electronic device 4 enable respective sound recording functions based on the respectively received first indication information.

Step 1503: After enabling the sound recording functions of the electronic device 2, the electronic device 3, and the electronic device 4, the electronic device 2, the electronic device 3, and the electronic device 4 send acknowledgment messages to the mouse, to notify the mouse that the sound recording functions of the electronic device 2, the electronic device 3, and the electronic device 4 are enabled.

Step 1504: The mouse sends second indication information to the electronic device 1, to indicate the electronic device 1 to play an ultrasonic signal, for example, sends the second indication information to the electronic device 1 based on a short-range communication connection established between the mouse and the electronic device 1.

Step 1505: The electronic device 1 plays the ultrasonic signal. For specific descriptions of step 1501 to step 1505, refer to the related descriptions of step 1201 to step 1205 in the method 1200. For brevity, details are not described herein.

Because respective sound recording functions are enabled on the electronic device 2, the electronic device 3, and the electronic device 4, after the electronic device 1 plays the ultrasonic signal, the ultrasonic signal is received by the electronic device 2, the electronic device 3, and the electronic device 4. Then, the electronic device 2, the electronic device 3, and the electronic device 4 may perform step 1506: The electronic device 2, the electronic device 3, and the electronic device 4 each determine a relative location relationship between the electronic device 1 and each of the electronic device 2, the electronic device 3, and the electronic device 4 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. Correspondingly, after receiving two ultrasonic signals, the electronic device 4 may determine, based on a difference between moments at which the two ultrasonic signals arrive at a sound recording module of the electronic device 4, that an ultrasonic signal that arrives at the sound recording module of the electronic device 4 earlier is an ultrasonic signal output by a right speaker of the electronic device 1. On the basis of this, the electronic device 4 may determine that the electronic device 4 is located on the right side of the electronic device 1. For a specific method for determining, by the electronic device 2, the electronic device 3, and the electronic device 4, the relative location relationship between the electronic device 1 and each of the electronic device 2, the electronic device 3, and the electronic device 4, refer to the related descriptions of the method 400. For brevity, details are not described herein again.

After determining the relative location relationship between the electronic device 1 and each of the electronic device 2, the electronic device 3, and the electronic device 4, the electronic device 2, the electronic device 3, and the electronic device 4 may perform step 1507: The electronic device 2, the electronic device 3, and the electronic device 4 send the relative location relationship between the electronic device 1 and each of the electronic device 2, the electronic device 3, and the electronic device 4 to the mouse.

Step 1508: The mouse determines, based on the relative location relationship between the electronic device 1 and each of the electronic device 2, the electronic device 3, and the electronic device 4 that is sent by each of the electronic device 2, the electronic device 3, and the electronic device 4, that the electronic device 2, the electronic device 3, and the electronic device 4 are all located on the right side of the electronic device 1.

Because the electronic device 2, the electronic device 3, and the electronic device 4 are all located on the right side of the electronic device 1, to obtain a relative location relationship between every two of the electronic device 1, the electronic device 2, the electronic device 3, and the electronic device 4, the mouse further needs to determine a relative location relationship between every two of the electronic device 2, the electronic device 3, and the electronic device 4. In this case, the method 1500 may further include the following steps:
Step 1509: The mouse separately sends the first indication information to the electronic device 2 and the electronic device 3, to indicate the electronic device 2 and the electronic device 3 to respectively enable respective sound recording functions.
Step 1510: The electronic device 2 and the electronic device 3 enable respective sound recording functions based on the respectively received first indication information.

After the mouse sends the first indication information to the electronic device 2 and the electronic device 3, in an implementation, after sending the first indication information to the electronic device 2 and the electronic device 3, the mouse may directly perform step 1512: The mouse sends the second indication information to the electronic device 4, to indicate the electronic device 4 to play the ultrasonic signal. For example, the mouse sends the second indication information to the electronic device 4 based on a short-range communication connection established between the mouse and the electronic device 4.

In another implementation, after the mouse sends the first indication information to the electronic device 2 and the electronic device 3, if the mouse receives acknowledgment messages, for example, Ack messages, from the electronic device 2 and the electronic device 3, the mouse performs step 1512. The acknowledgment messages from the electronic device 2 and the electronic device 3 are responses respectively made by the electronic device 2 and the electronic device 3 for the first indication information. In this case, before step 1512, the method 1500 may further include step 1511: After enabling the sound recording functions of the electronic device 2 and the electronic device 3, the electronic device 2 and the electronic device 3 send the acknowledgment messages to the mouse, to notify the mouse that the sound recording functions of the electronic device 2 and the electronic device 3 are enabled.

After receiving the second indication information, the electronic device 4 performs step 1513: Play an ultrasonic signal.

Because respective sound recording functions are enabled on the electronic device 2 and the electronic device 3, after the electronic device 4 plays the ultrasonic signal, the ultrasonic signal is received by the electronic device 2 and the electronic device 3. Then, the electronic device 2 and the electronic device 3 may perform step 1514: The electronic device 2 and the electronic device 3 each determine a relative location relationship between each of the electronic device 2 and the electronic device 3 and the electronic device 4 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 4. On the basis of this, the electronic device 2 may determine that the electronic device 2 is located on the left side of the electronic device 4. Correspondingly, after receiving two ultrasonic signals, the electronic device 3 may determine, based on a difference between moments at which the two ultrasonic signals arrive at the sound recording module of the electronic device 3, that an ultrasonic signal that arrives at the sound recording module of the electronic device 3 earlier is an ultrasonic signal output by the left speaker of the electronic device 4. On the basis of this, the electronic device 3 may determine that the electronic device 3 is located on the left side of the electronic device 4. For a specific method for determining, by the electronic device 2 and the electronic device 3, the relative location relationship between each of the electronic device 2 and the electronic device 3 and the electronic device 4, refer to the related descriptions of the method 400. For brevity, details are not described herein again.

After determining the relative location relationship between each of the electronic device 2 and the electronic device 3 and the electronic device 4, the electronic device 2 and the electronic device 3 may perform step 1515: The electronic device 2 and the electronic device 3 send the relative location relationship between each of the electronic device 2 and the electronic device 3 and the electronic device 4 to the mouse.

Step 1516: The mouse determines, based on the relative location relationship between each of the electronic device 2 and the electronic device 3 and the electronic device 4 that is sent by each of the electronic device 2 and the electronic device 3, that both the electronic device 2 and the electronic device 3 are located on the left side of the electronic device 4.

Because both the electronic device 2 and the electronic device 3 are located on the left side of the electronic device 4, to obtain a relative location relationship between every two of the electronic device 1, the electronic device 2, the electronic device 3, and the electronic device 4, the mouse further needs to determine a relative location relationship between the electronic device 2 and the electronic device 3. In this case, the method 1500 may further include the following steps:
Step 1517: The mouse sends the first indication information to the electronic device 2, where the first indication information indicates the electronic device 2 to enable the sound recording function.
Step 1518: The electronic device 2 enables the sound recording function based on the first indication information.

In an implementation, after sending the first indication information to the electronic device 2, the mouse may perform step 1520: The mouse sends the second indication information to the electronic device 3, to indicate the electronic device 3 to play the ultrasonic signal. For example, the mouse sends the second indication information to the electronic device 3 based on a short-range communication connection established between the mouse and the electronic device 3.

In another implementation, after the mouse sends the first indication information to the electronic device 2, if the mouse receives the acknowledgment message from the electronic device 2, the mouse performs step 1520. The acknowledgment message from the electronic device 2 is a response made by the electronic device 2 for the first indication information. In this case, before step 1520, the method 1500 may further include step 1519: After enabling the sound recording function of the electronic device 2, the electronic device 2 sends the acknowledgment message to the mouse, to notify the mouse that the sound recording function of the electronic device 2 is enabled.

After receiving the second indication information, the electronic device 3 performs step 1521: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 1522: The electronic device 2 determines the relative location relationship with the electronic device 3 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 1523: The electronic device 2 sends the relative location relationship between the electronic device 2 and the electronic device 3 to the mouse.

Step 1524: The mouse determines, based on the relative location relationship between the electronic device 2 and the electronic device 3 that is sent by the electronic device 2, that the electronic device 2 is located on the left side of the electronic device 3.

After determining that the electronic device 2 is located on the left side of the electronic device 3, based on step 1508, step 1516, and step 1524, the mouse may determine that the electronic device 2 is located on the right side of the electronic device 1, the electronic device 3 is located on the right side of the electronic device 2, and the electronic device 4 is located on the right side of the electronic device 3. In this case, to enable a cursor to freely switch between the electronic device 1, the electronic device 2, the electronic device 3, and the electronic device 4, the mouse further needs to notify each device of the relative location relationship between every two of the electronic device 1, the electronic device 2, the electronic device 3, and the electronic device 4. In this case, the method 1500 further includes step 1525: The mouse separately sends, to the electronic device 1, the electronic device 2, the electronic device 3, and the electronic device 4, the relative location relationship between every two of the electronic device 1, the electronic device 2, the electronic device 3, and the electronic device 4. For example, the mouse separately sends, to the electronic device 1, the electronic device 2, the electronic device 3, and the electronic device 4, relationships that the electronic device 2 is located on the right side of the electronic device 1, the electronic device 3 is located on the right side of the electronic device 2, and the electronic device 4 is located on the right side of the electronic device 3.

After the electronic device 1, the electronic device 2, the electronic device 3, and the electronic device 4 obtain the relative location relationship between every two of the electronic device 1, the electronic device 2, the electronic device 3, and the electronic device 4, free switching of the cursor between the electronic device 1, the electronic device 2, the electronic device 3, and the electronic device 4 may be supported. For an example in which the cursor freely switches between the electronic device 1, the electronic device 2, the electronic device 3, and the electronic device 4, refer to the related descriptions of the method 400. For brevity, details are not described herein again.

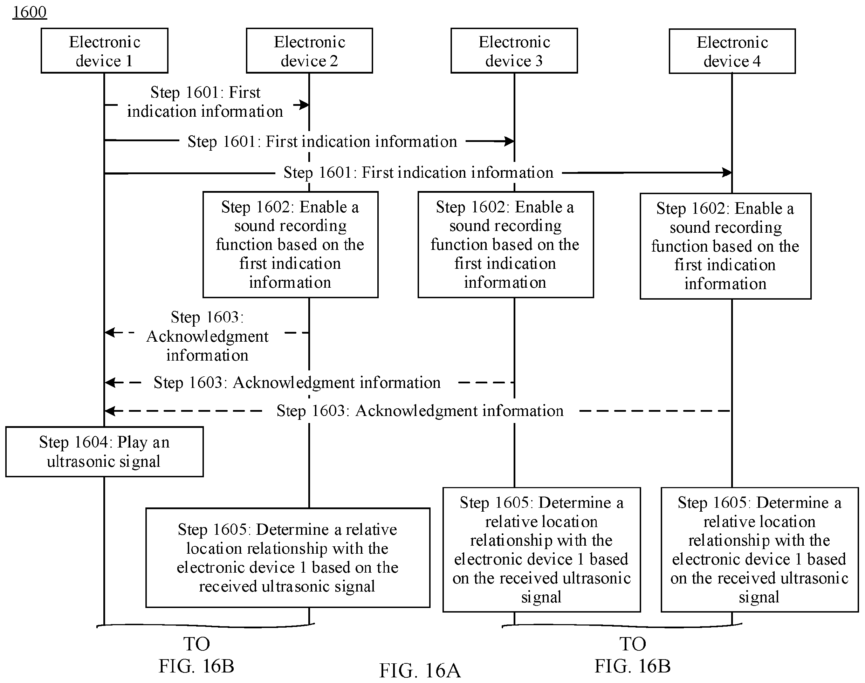

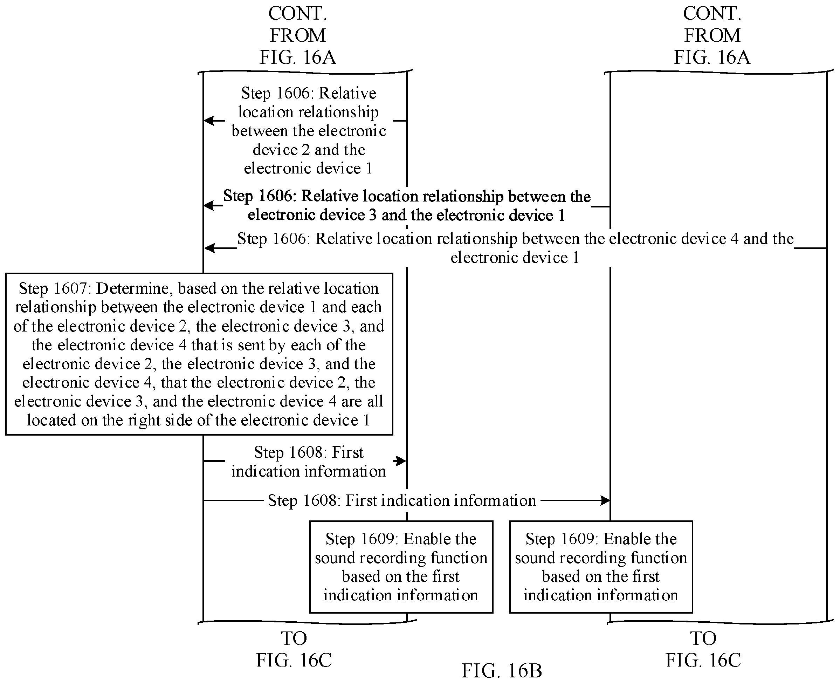

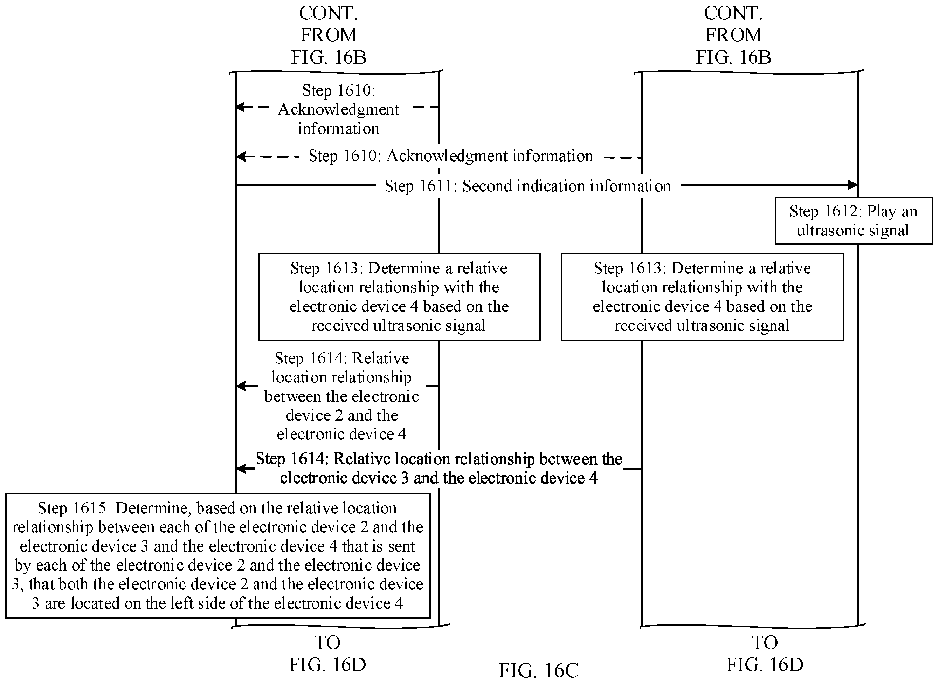

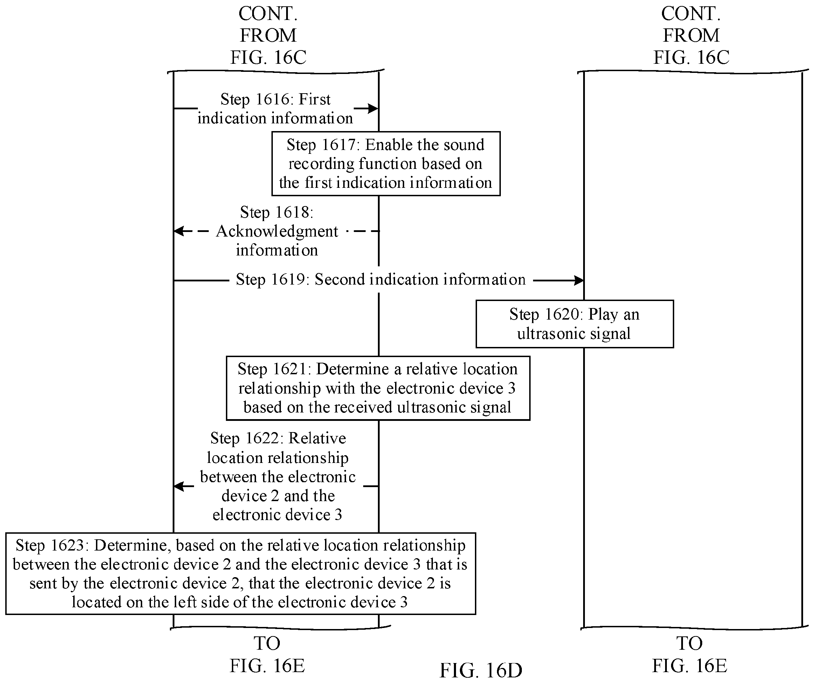

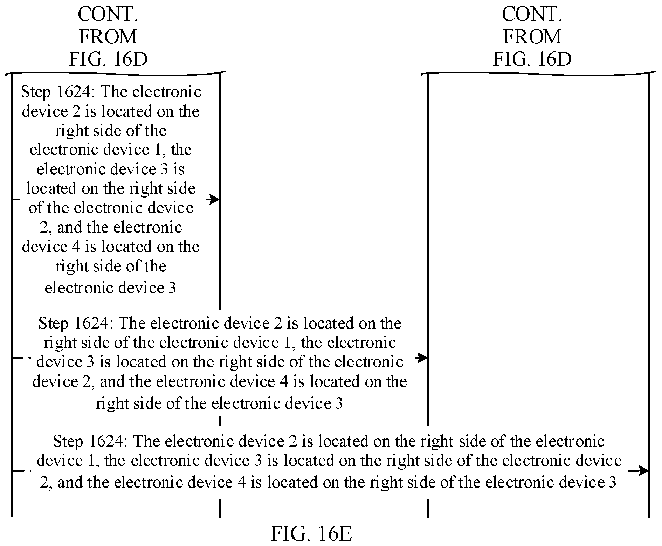

Still with reference to the scenario shown in FIG. 14, the following describes still another example location identification method provided in embodiments of this application by using an example in which one of the electronic device 1, the electronic device 2, the electronic device 3, and the electronic device 4 determines the relative location relationship between every two of the electronic device 1, the electronic device 2, the electronic device 3, and the electronic device 4. FIG. 16A to FIG. 16E are an interaction flowchart of a location identification method 1600. It should be noted that, in the method 1600, the electronic device 1 corresponds to a third electronic device, and the electronic device 2, the electronic device 3, and the electronic device 4 are respectively in a one-to-one correspondence with three second electronic devices.

An electronic device configured to determine the relative location relationship between every two of the electronic device 1, the electronic device 2, the electronic device 3, and the electronic device 4 may be selected by a user from the electronic device 1, the electronic device 2, the electronic device 3, and the electronic device 4. In other words, any one of the electronic device 1, the electronic device 2, the electronic device 3, and the electronic device 4 may be selected by the user as the electronic device configured to determine the relative location relationship between every two of the electronic device 1, the electronic device 2, the electronic device 3, and the electronic device 4.

It is assumed that the user selects the electronic device 1 as the electronic device configured to determine the relative location relationship between every two of the electronic device 1, the electronic device 2, the electronic device 3, and the electronic device 4. After the electronic device configured to determine the relative location relationship between every two of the electronic device 1, the electronic device 2, the electronic device 3, and the electronic device 4 is selected, and a short-range communication connection is established between any one of the electronic device 1, the electronic device 2, the electronic device 3, and the electronic device 4 and the other two devices, the user may trigger start of the location identification procedure. For a specific implementation of selecting, by the user, the electronic device configured to determine the relative location relationship between every two of the electronic device 1, the electronic device 2, the electronic device 3, and the electronic device 4, a specific implementation of establishing the short-range communication connection between any one of the electronic device 1, the electronic device 2, the electronic device 3, and the electronic device 4 and the other two devices, and a specific implementation of triggering, by the user, start of the location identification procedure, refer to the related descriptions of the method 600. For brevity, details are not described herein again.

After the location identification procedure is started, the electronic device 1 may perform the following steps:
Step 1601: The electronic device 1 separately sends first indication information to the electronic device 2, the electronic device 3, and the electronic device 4, to indicate the electronic device 2, the electronic device 3, and the electronic device 4 to respectively enable respective sound recording functions.
Step 1602: The electronic device 2, the electronic device 3, and the electronic device 4 enable respective sound recording functions based on the respectively received first indication information.
Step 1603: After enabling respective sound recording functions of the electronic device 2, the electronic device 3, and the electronic device 4, the electronic device 2, the electronic device 3, and the electronic device 4 send acknowledgment messages to the electronic device 1, to notify the electronic device 1 that the sound recording functions of the electronic device 2, the electronic device 3, and the electronic device 4 are enabled.
Step 1604: The electronic device 1 plays an ultrasonic signal. For specific descriptions of step 1601 to step 1604, refer to the related descriptions of step 1301 to step 1304 in the method 1300. For brevity, details are not described herein.

Because respective sound recording functions are enabled on the electronic device 2, the electronic device 3, and the electronic device 4, after the electronic device 1 plays the ultrasonic signal, the ultrasonic signal is received by the electronic device 2, the electronic device 3, and the electronic device 4. Then, the electronic device 2, the electronic device 3, and the electronic device 4 may perform step 1605: The electronic device 2, the electronic device 3, and the electronic device 4 each determine a relative location relationship between the electronic device 1 and each of the electronic device 2, the electronic device 3, and the electronic device 4 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at a sound recording module of the electronic device 2, that an ultrasonic signal that arrives at the sound recording module of the electronic device 2 earlier is an ultrasonic signal output by a right speaker of the electronic device 1. On the basis of this, the electronic device 2 may determine that the electronic device 2 is located on the right side of the electronic device 1. Correspondingly, after receiving two ultrasonic signals, the electronic device 3 may determine, based on a difference between moments at which the two ultrasonic signals arrive at a sound recording module of the electronic device 3, that an ultrasonic signal that arrives at the sound recording module of the electronic device 3 earlier is an ultrasonic signal output by the right speaker of the electronic device 1. On the basis of this, the electronic device 3 may determine that the electronic device 3 is located on the right side of the electronic device 1. Correspondingly, after receiving two ultrasonic signals, the electronic device 4 may determine, based on a difference between moments at which the two ultrasonic signals arrive at a sound recording module of the electronic device 4, that an ultrasonic signal that arrives at the sound recording module of the electronic device 4 earlier is an ultrasonic signal output by the right speaker of the electronic device 1. On the basis of this, the electronic device 4 may determine that the electronic device 4 is located on the right side of the electronic device 1. For a specific method for determining, by the electronic device 2, the electronic device 3, and the electronic device 4, the relative location relationship between the electronic device 1 and each of the electronic device 2, the electronic device 3, and the electronic device 4, refer to the related descriptions of the method 400. For brevity, details are not described herein again.

After determining the relative location relationship between the electronic device 1 and each of the electronic device 2, the electronic device 3, and the electronic device 4, the electronic device 2, the electronic device 3, and the electronic device 4 may perform step 1606: The electronic device 2, the electronic device 3, and the electronic device 4 send the relative location relationship between the electronic device 1 and each of the electronic device 2, the electronic device 3, and the electronic device 4 to the electronic device 1.

Step 1607: The electronic device 1 determines, based on the relative location relationship between the electronic device 1 and each of the electronic device 2, the electronic device 3, and the electronic device 4 that is sent by each of the electronic device 2, the electronic device 3, and the electronic device 4, that the electronic device 2, the electronic device 3, and the electronic device 4 are all located on the right side of the electronic device 1.

Because the electronic device 2, the electronic device 3, and the electronic device 4 are all located on the right side of the electronic device 1, to obtain a relative location relationship between every two of the electronic device 1, the electronic device 2, the electronic device 3, and the electronic device 4, the electronic device 1 further needs to determine a relative location relationship between every two of the electronic device 2, the electronic device 3, and the electronic device 4. In this case, the method 1600 may further include the following steps:
Step 1608: The electronic device 1 separately sends the first indication information to the electronic device 2 and the electronic device 3, to indicate the electronic device 2 and the electronic device 3 to respectively enable respective sound recording functions.
Step 1609: The electronic device 2 and the electronic device 3 enable respective sound recording functions based on the respectively received first indication information.

After the electronic device 1 sends the first indication information to the electronic device 2 and the electronic device 3, in an implementation, after sending the first indication information to the electronic device 2 and electronic device 3, the electronic device 1 may directly perform step 1611: The electronic device 1 sends second indication information to the electronic device 4, to indicate the electronic device 4 to play an ultrasonic signal. For example, the electronic device 1 sends the second indication information to the electronic device 4 based on a short-range communication connection established between the electronic device 1 and the electronic device 4.

In another implementation, after the electronic device 1 sends the first indication information to the electronic device 2 and the electronic device 3, if the electronic device 1 receives acknowledgment messages, for example, Ack messages, from the electronic device 2 and the electronic device 3, the electronic device 1 performs step 1611. The acknowledgment messages from the electronic device 2 and the electronic device 3 are responses respectively made by the electronic device 2 and the electronic device 3 for the first indication information. In this case, before step 1611, the method 1600 may further include step 1610: After enabling the sound recording functions of the electronic device 2 and the electronic device 3, the electronic device 2 and the electronic device 3 send acknowledgment messages to the electronic device 1, to notify the electronic device 1 that the sound recording functions of the electronic device 2 and the electronic device 3 are enabled.

After receiving the second indication information, the electronic device 4 performs step 1612: Play an ultrasonic signal.

Because respective sound recording functions are enabled on the electronic device 2 and the electronic device 3, after the electronic device 4 plays the ultrasonic signal, the ultrasonic signal is received by the electronic device 2 and the electronic device 3. Then, the electronic device 2 and the electronic device 3 may perform step 1613: The electronic device 2 and the electronic device 3 each determine a relative location relationship between each of the electronic device 2 and the electronic device 3 and the electronic device 4 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 4. On the basis of this, the electronic device 2 may determine that the electronic device 2 is located on the left side of the electronic device 4. Correspondingly, after receiving two ultrasonic signals, the electronic device 3 may determine, based on a difference between moments at which the two ultrasonic signals arrive at the sound recording module of the electronic device 3, that an ultrasonic signal that arrives at the sound recording module of the electronic device 3 earlier is an ultrasonic signal output by the left speaker of the electronic device 4. On the basis of this, the electronic device 3 may determine that the electronic device 3 is located on the left side of the electronic device 4. For a specific method for determining, by the electronic device 2 and the electronic device 3, the relative location relationship between each of the electronic device 2 and the electronic device 3 and the electronic device 4, refer to the related descriptions of the method 400. For brevity, details are not described herein again.

After determining the relative location relationship between each of the electronic device 2 and the electronic device 3 and the electronic device 4, the electronic device 2 and the electronic device 3 may perform step 1614: The electronic device 2 and the electronic device 3 send the relative location relationship between each of the electronic device 2 and the electronic device 3 and the electronic device 4 to the electronic device 1.

Step 1615: The electronic device 1 determines, based on the relative location relationship between each of the electronic device 2 and the electronic device 3 and the electronic device 4 that is sent by each of the electronic device 2 and the electronic device 3, that both the electronic device 2 and the electronic device 3 are located on the left side of the electronic device 4.

Because both the electronic device 2 and the electronic device 3 are located on the right side of the electronic device 4, to obtain a relative location relationship between every two of the electronic device 1, the electronic device 2, the electronic device 3, and the electronic device 4, the electronic device 1 further needs to determine a relative location relationship between the electronic device 2 and the electronic device 3. In this case, the method 1600 may further include the following steps:
Step 1616: The electronic device 1 sends the first indication information to the electronic device 2, where the first indication information indicates the electronic device 2 to enable the sound recording function.
Step 1617: The electronic device 2 enables the sound recording function based on the first indication information.

In an implementation, after sending the first indication information to the electronic device 2, the electronic device 1 may perform step 1619: The electronic device 1 sends second indication information to the electronic device 3, to indicate the electronic device 3 to play the ultrasonic signal. For example, the electronic device 1 sends the second indication information to the electronic device 3 based on a short-range communication connection established between the electronic device 1 and the electronic device 3.

In another implementation, after the electronic device 1 sends the first indication information to the electronic device 2, if the electronic device 1 receives the acknowledgment message from the electronic device 2, the electronic device 1 performs step 1619. The acknowledgment message from the electronic device 2 is a response made by the electronic device 2 for the first indication information. In this case, before step 1619, the method 1600 may further include step 1618: After enabling the sound recording function of the electronic device 2, the electronic device 2 sends the acknowledgment message to the electronic device 1, to notify the electronic device 1 that the sound recording function of the electronic device 2 is enabled.

After receiving the second indication information, the electronic device 3 performs step 1620: Play an ultrasonic signal.

Because the sound recording function is enabled on the electronic device 2, after the electronic device 3 plays the ultrasonic signal, the ultrasonic signal is received by the electronic device 2. Then, the electronic device 2 may perform step 1621: The electronic device 2 determines the relative location relationship with the electronic device 3 based on the received ultrasonic signal.

With reference to the scenario shown in FIG. 14, it can be learned that, after receiving two ultrasonic signals, the electronic device 2 may determine, based on a difference between moments at which the two ultrasonic signals arrive at the sound recording module of the electronic device 2, that an ultrasonic signal that arrives at the sound recording module of the electronic device 2 earlier is an ultrasonic signal output by a left speaker of the electronic device 3. On the basis of this, the electronic device 2 may determine that the electronic device 2 is located on the left side of the electronic device 3.

After determining the relative location relationship between the electronic device 2 and the electronic device 3, the electronic device 2 may perform step 1622: The electronic device 2 sends the relative location relationship between the electronic device 2 and the electronic device 3 to the electronic device 1.

Step 1623: The electronic device 1 determines, based on the relative location relationship between the electronic device 2 and the electronic device 3 that is sent by the electronic device 2, that the electronic device 2 is located on the left side of the electronic device 3.

After determining that the electronic device 2 is located on the left side of the electronic device 3, based on step 1607, step 1615, and step 1623, the electronic device 1 may determine that the electronic device 2 is located on the right side of the electronic device 1, the electronic device 3 is located on the right side of the electronic device 2, and the electronic device 4 is located on the right side of the electronic device 3. In this case, to enable a cursor to freely switch between the electronic device 1, the electronic device 2, the electronic device 3, and the electronic device 4, the electronic device 1 further needs to notify each device of the relative location relationship between every two of the electronic device 1, the electronic device 2, the electronic device 3, and the electronic device 4. In this case, the method 1600 further includes step 1624: The electronic device 1 separately sends, to the electronic device 1, the electronic device 2, the electronic device 3, and the electronic device 4, the relative location relationship between every two of the electronic device 1, the electronic device 2, the electronic device 3, and the electronic device 4. For example, the electronic device 1 separately sends, to the electronic device 1, the electronic device 2, the electronic device 3, and the electronic device 4, relationships that the electronic device 2 is located on the right side of the electronic device 1, the electronic device 3 is located on the right side of the electronic device 2, and the electronic device 4 is located on the right side of the electronic device 3.

After the electronic device 1, the electronic device 2, the electronic device 3, and the electronic device 4 obtain the relative location relationship between every two of the electronic device 1, the electronic device 2, the electronic device 3, and the electronic device 4, free switching of the cursor between the electronic device 1, the electronic device 2, the electronic device 3, and the electronic device 4 may be supported. For an example in which the cursor freely switches between the electronic device 1, the electronic device 2, the electronic device 3, and the electronic device 4, refer to the related descriptions of the method 400. For brevity, details are not described herein again.

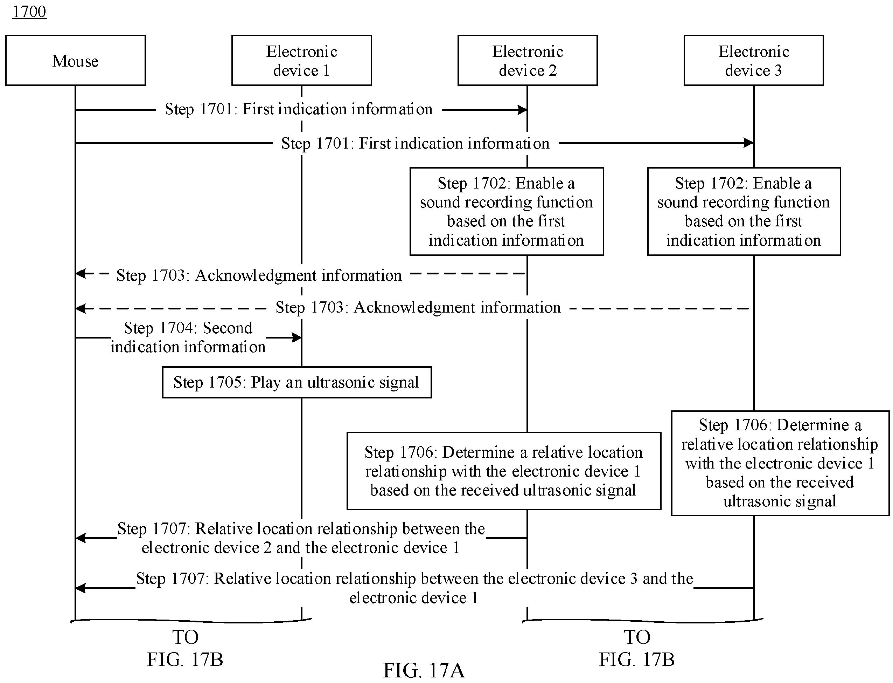

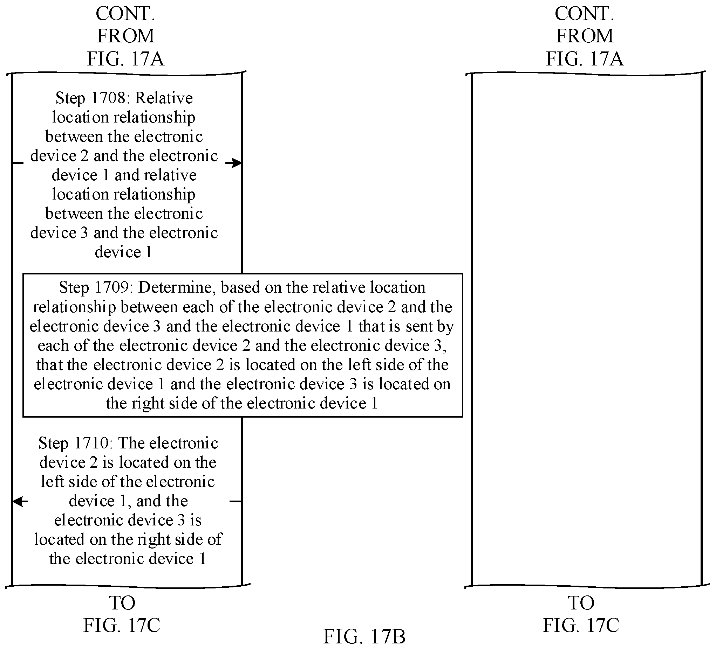

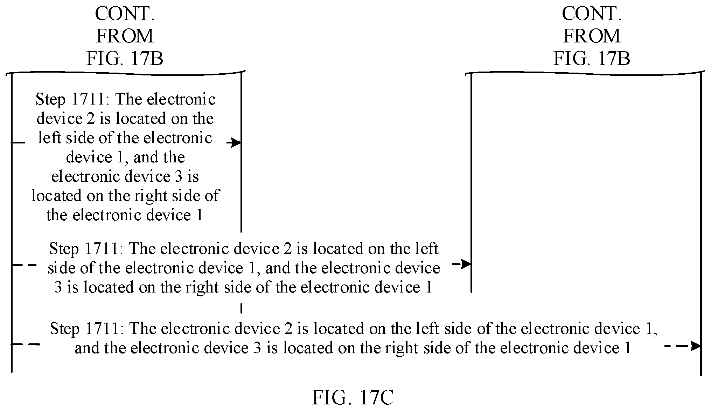

It should be noted that, when a relative location relationship between every two of a plurality of electronic devices is determined, functions of the mouse described in the foregoing method are merely used as an example for description, and do not constitute a limitation on embodiments of this application. In embodiments of this application, when the relative location relationship between every two of the plurality of electronic devices is determined, the functions of the mouse are further implemented in the following manners:
When the relative location relationship between every two of the plurality of electronic devices is determined, after receiving a relative location relationship between each of other electronic devices and an electronic device 1 that is sent by each of the other electronic devices, the mouse may not perform a step of determining the relative location relationship between every two of the plurality of electronic devices, but send the relative location relationship between each of the other devices and the electronic device 1 to the electronic device 1, and the electronic device 1 determines the relative location relationship between every two of the plurality of electronic devices. Then, the electronic device 1 sends the relative location relationship between every two of the plurality of electronic devices to the mouse. Finally, the mouse sends the relative location relationship between every two of the plurality of electronic devices to each electronic device. On the basis of this, the following uses the scenario shown in FIG. 3 as an example to describe a location identification method 1700 provided in an embodiment of this application. FIG. 17A to FIG. 17C are a flowchart of example interaction in the location identification method 1700. The method 1700 includes at least the following steps:
Step 1701: The mouse separately sends first indication information to an electronic device 2 and an electronic device 3, to indicate the electronic device 2 and the electronic device 3 to respectively enable respective sound recording functions. For a specific implementation of step 1701, refer to the related descriptions of step 401. For brevity, details are not described herein again.
Step 1702: The electronic device 2 and the electronic device 3 enable respective sound recording functions based on the respectively received first indication information.
Step 1703: After enabling respective sound recording functions, the electronic device 2 and the electronic device 3 send acknowledgment messages to the mouse, to indicate that the sound recording functions of the electronic device 2 and the electronic device 3 are enabled.
Step 1704: The mouse sends second indication information to the electronic device 1, to indicate the electronic device 1 to play an ultrasonic signal. For example, the mouse sends the second indication information to the electronic device 1 based on a short-range communication connection established between the mouse and the electronic device 1. For a specific implementation of step 1702 to step 1704, refer to the related descriptions of step 402 to step 404. For brevity, details are not described herein again.

After receiving the second indication information, the electronic device 1 performs step 1705: Play the ultrasonic signal. For a specific implementation of step 1705, refer to the related descriptions of step 405. For brevity, details are not described herein again.

Because respective sound recording functions are enabled on the electronic device 2 and the electronic device 3, after the electronic device 1 plays the ultrasonic signal, the ultrasonic signal is received by the electronic device 2 and the electronic device 3. Then, the electronic device 2 and the electronic device 3 may perform step 1706: The electronic device 2 and the electronic device 3 each determine a relative location relationship between each of the electronic device 2 and the electronic device 3 and the electronic device 1 based on the received ultrasonic signal. For a specific implementation of step 1706, refer to the related descriptions of step 406. For brevity, details are not described herein again.

After determining the relative location relationship between each of the electronic device 2 and the electronic device 3 and the electronic device 1, the electronic device 2 and the electronic device 3 may perform step 1707: The electronic device 2 and the electronic device 3 send the relative location relationship between each of the electronic device 2 and the electronic device 3 and the electronic device 1 to the mouse. For a specific implementation of step 1707, refer to the related descriptions of step 407. For brevity, details are not described herein again.

Step 1708: The mouse sends the relative location relationship between each of the electronic device 2 and the electronic device 3 and the electronic device 1 to the electronic device 1.

After receiving the relative location relationship between the electronic device 2 and the electronic device 1 that is sent by the electronic device 2 and the relative location relationship between the electronic device 3 and the electronic device 1 that is sent by the electronic device 3, the mouse may send the relative location relationship between the electronic device 2 and the electronic device 1 and the relative location relationship between the electronic device 3 and the electronic device 1 to the electronic device 1.

It should be noted that, in step 1708, the mouse may also send, to the electronic device 2 or the electronic device 3, the relative location relationship between the electronic device 2 and the electronic device 1 and a relative location relationship between the electronic device 3 and the electronic device 1. In an implementation, the mouse may send the relative location relationship between the electronic device 3 and the electronic device 1 to the electronic device 2, so that the electronic device 2 may determine a relative location relationship between every two of the electronic device 1, the electronic device 2, and the electronic device 3 based on the relative location relationship between the electronic device 2 and the electronic device 1 and the relative location relationship between the electronic device 3 and the electronic device 1. In another implementation, the mouse may send the relative location relationship between the electronic device 2 and the electronic device 1 to the electronic device 3, so that the electronic device 3 may determine a relative location relationship between every two of the electronic device 1, the electronic device 2, and the electronic device 3 based on the relative location relationship between the electronic device 2 and the electronic device 1 and the relative location relationship between the electronic device 3 and the electronic device 1. In addition, the mouse may further send both the relative location relationship between the electronic device 2 and the electronic device 1 and the relative location relationship between the electronic device 3 and the electronic device 1 to the electronic device 2, or send both the relative location relationship between the electronic device 2 and the electronic device 1 and the relative location relationship between the electronic device 3 and the electronic device 1 to the electronic device 3. This is not limited in embodiments of this application.

Step 1709: The electronic device 1 determines, based on the relative location relationship between the electronic device 2 and the electronic device 1 and the relative location relationship between the electronic device 3 and the electronic device 1 that are sent by the mouse, that the electronic device 2 is located on the left side of the electronic device 1 and the electronic device 3 is located on the right side of the electronic device 1.

After determining that the electronic device 2 is located on the left side of the electronic device 1 and the electronic device 3 is located on the right side of the electronic device 1, the electronic device 1 obtains the relative location relationship between every two of the electronic device 1, the electronic device 2, and the electronic device 3. Then, the electronic device 1 may perform step 1710: The electronic device 1 sends the relative location relationship between every two of the electronic device 1, the electronic device 2, and the electronic device 3 to the mouse.

After the mouse receives the relative location relationship between every two of the electronic device 1, the electronic device 2, and the electronic device 3 that is sent by the electronic device 1, to enable a cursor to freely switch between the electronic device 1, the electronic device 2, and the electronic device 3, the mouse further needs to notify each device of the relative location relationship between every two of the electronic device 1, the electronic device 2, and the electronic device 3. In this case, the method 1700 further includes step 1711: The mouse separately sends, to the electronic device 1, the electronic device 2, and the electronic device 3, the relative location relationship between every two of the electronic device 1, the electronic device 2, and the electronic device 3. For example, the mouse separately sends, to the electronic device 1, the electronic device 2, and the electronic device 3, relationships that the electronic device 2 is located on the left side of the electronic device 1 and the electronic device 3 is located on the right side of the electronic device 1.

After the electronic device 1, the electronic device 2, and the electronic device 3 obtain the relative location relationship between every two of the electronic device 1, the electronic device 2, and the electronic device 3, free switching of the mouse between the electronic device 1, the electronic device 2, and the electronic device 3 may be supported.

For an example in which the cursor freely switches between the electronic device 1, the electronic device 2, and the electronic device 3, refer to the related descriptions of the method 400. For brevity, details are not described herein again.

It should be noted that, in the method 1700, the location identification method provided in embodiments of this application is described by using an example in which the electronic device 1 is used as a device for playing an ultrasonic signal, and the electronic device 2 and the electronic device 3 are used as devices for receiving the ultrasonic signal. However, this does not constitute a limitation on embodiments of this application. For example, during specific implementation, any one of the electronic device 1, the electronic device 2, and the electronic device 3 may be used as the device for playing the ultrasonic signal, and the other two devices are used as devices for receiving the ultrasonic signal. This is not limited in embodiments of this application. For example, the device for playing the ultrasonic signal may be a device that is the first to establish a short-range communication connection to the mouse. It should be understood that, compared with that in the method 400, a change made in the method 1700 to the functions of the mouse when the mouse determines the relative location relationship between every two of the plurality of electronic devices is also applicable to another scenario in embodiments of this application, namely, the scenario shown in FIG. 8, the scenario shown in FIG. 11, and the scenario shown in FIG. 14.

It should be understood that, in embodiments of this application, the location identification method is described only by using an example in which the sound recording function is enabled before the ultrasonic signal is played. However, this does not constitute a limitation on embodiments of this application. During specific implementation, the ultrasonic signal may be played before the sound recording function is enabled, provided that it can be ensured that an electronic device that enables the sound recording function can receive at least one group of ultrasonic signals from a left speaker and a right speaker of a device playing the ultrasonic signal.

For example, before the sound recording function is indicated to be enabled or when the sound recording function is indicated to be enabled, the ultrasonic signal may be indicated to be played. When the ultrasonic signal is indicated to be played, the electronic device may be indicated to play the ultrasonic signal after a period of time. The at least one group of ultrasonic signals from the left speaker and the right speaker of the device that plays the ultrasonic signal may be understood as: In the method 400, the ultrasonic signal s₁ played within the duration T₁ via the left speaker and the ultrasonic signal s₂ played within the duration T₃ via the right speaker of the electronic device 1 are a group of ultrasonic signals from the left speaker and the right speaker of the electronic device 1.

It should be noted that, in embodiments of this application, a same side has a same meaning as a same side, and an opposite side has a same meaning as a different side.

According to the location identification method provided in embodiments of this application, the first electronic device indicates at least two second electronic devices to enable respective sound recording functions, and indicates the third electronic device to send an ultrasonic signal. After enabling the sound recording functions, the at least two second electronic devices each determine a relative location relationship between each of the at least two second electronic devices and the third electronic device based on the ultrasonic signal detected by using respective sound recording functions, and then send the relative location relationship between each of the at least two second electronic devices and the third electronic device to the first electronic device. Finally, the first electronic device determines a relative location relationship between every two of the plurality of electronic devices based on the relative location relationship between each of the at least two second electronic devices and the third electronic device that is sent by each of the at least two electronic devices, to automatically identify the relative location relationship between every two of the plurality of electronic devices. According to this method, the user does not need to manually set the relative location relationship between every two of the plurality of devices. Therefore, the operation is simple and convenient.

It may be understood that, to implement the foregoing functions, the electronic device includes corresponding hardware and/or software modules for performing the functions. With reference to algorithms and steps in examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into function modules based on the foregoing method examples. For example, each function module corresponding to each function may be obtained through division, or two or more functions may be integrated into one processing module. The integrated module may be implemented in a form of hardware. It should be noted that, in this embodiment, the division of the modules is an example, and is merely logical function division. During an actual implementation, another division manner may be used.

It should be noted that all related content of the steps in the foregoing method embodiments may be cited in function description of corresponding functional modules. Details are not described herein again.

The electronic device provided in this embodiment is configured to perform the foregoing location identification method, and therefore can achieve a same effect as the foregoing implementation method.

When an integrated unit is used, the electronic device may include a processing module, a storage module, and a communication module. The processing module may be configured to: control and manage an action of the electronic device. The storage module may be configured to support the electronic device to store program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor, and the storage module is a memory, the electronic device in this embodiment may be a device having a structure shown in FIG. 1 or a device having a structure shown in FIG. 2.

This embodiment further provides a computer-storage medium. The computer-storage medium stores computer instructions. When the computer instructions are run on an electronic device, the electronic device is enabled to perform the related method steps, to implement the location identification method in the foregoing embodiments.

This embodiment further provides a computer program product. When the computer program product is run on a computer, the computer is enabled to perform the foregoing related steps, to implement the location identification method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the location identification method in the foregoing method embodiments.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A location identification method, applied to a first electronic device, wherein the method comprises:
sending (401) first indication information to at least two second electronic devices, wherein the first indication information indicates the corresponding second electronic devices to enable sound recording functions;
sending (404) second indication information to a third electronic device, wherein the second indication information indicates the third electronic device to send an ultrasonic signal, and the ultrasonic signal is alternately sent via a first speaker with a progressively decreasing frequency and via a second speaker with a progressively increasing frequency, and is used to determine a relative location relationship between the third electronic device and each of the at least two second electronic devices;
receiving (407) the relative location relationship between each of the at least two second electronic devices and the third electronic device that is sent by each of the at least two second electronic devices; and
sending the relative location relationship between each of the at least two second electronic devices and the third electronic device to the at least two second electronic devices and the third electronic device; or
determining a relative location relationship between every two of the at least two second electronic devices based on the relative location relationship between each of the at least two second electronic devices and the third electronic device.

2. The method according to claim 1, wherein the at least two second electronic devices comprise two second electronic devices, and the relative location relationship between each of the at least two second electronic devices and the third electronic device comprises: one of the two second electronic devices is located on a first side of the third electronic device, and the other second electronic device in the two electronic devices is located on a second side of the third electronic device, wherein the first side is a left side or a right side, and the second side is opposite to the first side.

3. The method according to claim 1, wherein the at least two second electronic devices comprise two second electronic devices, the relative location relationship between each of the at least two second electronic devices and the third electronic device comprises: the two second electronic devices are both located on a left side or a right side of the third electronic device, and the determining a relative location relationship between every two of the at least two second electronic devices based on the relative location relationship between each of the at least two second electronic devices and the third electronic device comprises:
sending the first indication information to one of the two second electronic devices;
sending the second indication information to the other second electronic device in the two second electronic devices, wherein the second indication information indicates the other second electronic device to play the ultrasonic signal, and the ultrasonic signal is used to determine a relative location relationship between the two second electronic devices; and
receiving the relative location relationship between the two second electronic devices that is sent by the other second electronic device.

4. The method according to claim 3, wherein before the sending the second indication information to the other second electronic device in the two second electronic devices, the method further comprises:
receiving an acknowledgment message that is for the first indication information and that is sent by the second electronic device in the two second electronic devices, wherein the acknowledgment message for the first indication information indicates that a sound recording function is enabled on the second electronic device in the two second electronic devices.

5. The method according to any one of claims 1 to 4, wherein before the sending second indication information to a third electronic device, the method further comprises:
receiving acknowledgment messages for the first indication information that are sent by the at least two second electronic devices, wherein the acknowledgment messages indicate that the sound recording functions are enabled on the corresponding second electronic devices.

6. A location identification method, applied to a second electronic device, wherein the method comprises:
receiving (401) first indication information from a first electronic device, wherein the first indication information indicates the second electronic device to enable a sound recording function;
enabling (402) the sound recording function based on the first indication information;
determining (406) a relative location relationship between the second electronic device and a third electronic device based on an ultrasonic signal that is alternately sent from the third electronic device via a first speaker with a progressively decreasing frequency and via a second speaker with a progressively increasing frequency, and that is detected based on the sound recording function;
sending the relative location relationship between the second electronic device and the third electronic device to the first electronic device; and
receiving a relative location relationship between each of at least two second electronic devices and the third electronic device that is sent by the first electronic device, wherein the at least two second electronic devices comprise the second electronic device.

7. The method according to claim 6, wherein the second electronic device is one of two second electronic devices, and the relative location relationship between the second electronic device and the third electronic device comprises: the second electronic device is located on a first side of the third electronic device, wherein the first side is opposite to a second side, the second side indicates a relative location relationship between the other second electronic device in the two second electronic devices and the third electronic device, and the first side is a left side or a right side.

8. The method according to claim 6, wherein the second electronic device is one of two second electronic devices, and the method further comprises:
receiving the first indication information sent by the first electronic device;
enabling the sound recording function based on the first indication information;
determining a relative location relationship between the second electronic device and the other second electronic device based on an ultrasonic signal that is from the other second electronic device in the two second electronic devices and that is detected based on the sound recording function; and
sending the relative location relationship between the second electronic device and the other second electronic device to the first electronic device.

9. The method according to claim 6, wherein the second electronic device is one of two second electronic devices, and the method further comprises:
receiving second indication information sent by the first electronic device, wherein the second indication information indicates the second electronic device to play the ultrasonic signal; and
playing the ultrasonic signal based on the second indication information, wherein the ultrasonic signal is used to determine a relative location relationship between the two second electronic devices.

10. The method according to any one of claims 7 to 9, wherein after the enabling, by the second electronic device, the sound recording function, the method further comprises:
sending an acknowledgment message for the first indication information to the first electronic device, wherein the acknowledgment message for the first indication information indicates that the sound recording function is enabled on the second electronic device.

11. An electronic device, comprising one or more processors, a memory, and one or more programs, wherein the one or more programs are stored in the memory, and when the one or more programs are executed by the processor, the electronic device is enabled to perform the method according to any one of claims 1 to 5.

12. An electronic device, comprising one or more processors, a memory, and one or more programs, wherein the one or more programs are stored in the memory, and when the one or more programs are executed by the processor, the electronic device is enabled to perform the method according to any one of claims 6 to 10.

13. A computer storage medium, comprising computer instructions, wherein when the computer instructions are run on an electronic device, the electronic device is enabled to perform the location identification method according to any one of claims 1 to 5 or claims 6 to 10.

14. A computer program product, wherein when the computer program product runs on a computer,
the computer is enabled to perform the location identification method according to any one of claims 1 to 5 or claims 6 to 10.

## Patentansprüche

1. Ortsidentifizierungsverfahren, angewandt auf ein erstes elektronisches Gerät, wobei das Verfahren umfasst:
Senden (401) von ersten Angabeinformationen an mindestens zwei zweite elektronische Geräte, wobei die ersten Angabeinformationen den korrespondierenden zweiten elektronischen Geräten angeben, Tonaufzeichnungsfunktionen zu aktivieren;
Senden (404) von zweiten Angabeinformationen an ein drittes elektronisches Gerät, wobei die zweiten Angabeinformationen dem dritten elektronischen Gerät angeben, ein Ultraschallsignal zu senden, und das Ultraschallsignal abwechselnd über einen ersten Lautsprecher mit einer progressiv abnehmenden Frequenz und über einen zweiten Lautsprecher mit einer progressiv zunehmenden Frequenz gesandt wird und verwendet wird, eine relative Ortsbeziehung zwischen dem dritten elektronischen Gerät und jedem der mindestens zwei zweiten elektronischen Geräte zu bestimmen;
Empfangen (407) der relativen Ortsbeziehung zwischen jedem der mindestens zwei zweiten elektronischen Geräte und dem dritten elektronischen Gerät, die von jedem der mindestens zwei zweiten elektronischen Geräte gesandt wird; und
Senden der relativen Ortsbeziehung zwischen jedem der mindestens zwei zweiten elektronischen Geräte und dem dritten elektronischen Gerät an die mindestens zwei zweiten elektronischen Geräte und das dritte elektronische Gerät; oder
Bestimmen einer relativen Ortsbeziehung zwischen jeweils zwei der mindestens zwei zweiten elektronischen Geräte basierend auf der relativen Ortsbeziehung zwischen jedem der mindestens zwei zweiten elektronischen Geräte und dem dritten elektronischen Gerät.

2. Verfahren nach Anspruch 1, wobei die mindestens zwei zweiten elektronischen Geräte zwei zweite elektronische Geräte umfassen und die relative Ortsbeziehung zwischen jedem der mindestens zwei zweiten elektronischen Geräte und dem dritten elektronischen Gerät umfasst: eines der zwei zweiten elektronischen Geräte ist an einer ersten Seite des dritten elektronischen Geräts angeordnet und das andere zweite elektronische Gerät der zwei elektronischen Geräte ist an einer zweiten Seite des dritten elektronischen Geräts angeordnet, wobei die erste Seite eine linke Seite oder eine rechte Seite ist und die zweite Seite gegenüber der ersten Seite ist.

3. Verfahren nach Anspruch 1, wobei die mindestens zwei zweiten elektronischen Geräte zwei zweite elektronischen Geräte umfassen, die relative Ortsbeziehung zwischen jedem der mindestens zwei zweiten elektronischen Geräte und dem dritten elektronischen Gerät umfasst: die zwei zweiten elektronischen Geräte sind beide an einer linken Seite oder einer rechten Seite des dritten elektronischen Geräts angeordnet, und das Bestimmen einer relativen Ortsbeziehung zwischen jeweils zwei der mindestens zwei zweiten elektronischen Geräte basierend auf der relativen Ortsbeziehung zwischen jedem der mindestens zwei zweiten elektronischen Geräte und dem dritten elektronischen Gerät umfasst:
Senden der ersten Angabeinformationen an eines der zwei zweiten elektronischen Geräte;
Senden der zweiten Angabeinformationen an das andere zweite elektronische Gerät der zwei zweiten elektronischen Geräte, wobei die zweiten Angabeinformationen dem anderen zweiten elektronischen Gerät angeben, das Ultraschallsignal wiederzugeben, und das Ultraschallsignal verwendet wird, eine relative Ortsbeziehung zwischen den zwei zweiten elektronischen Geräten zu bestimmen; und
Empfangen der relativen Ortsbeziehung zwischen den zwei zweiten elektronischen Geräten, die von dem anderen zweiten elektronischen Gerät gesandt wird.

4. Verfahren nach Anspruch 3, wobei das Verfahren vor dem Senden der zweiten Angabeinformationen an das andere zweite elektronische Gerät der zwei zweiten elektronischen Geräte ferner umfasst:
Empfangen einer Bestätigungsnachricht, die für die ersten Angabeinformationen ist und die von dem zweiten elektronischen Gerät der zwei zweiten elektronischen Geräte gesandt wird, wobei die Bestätigungsnachricht für die ersten Angabeinformationen angibt, dass eine Tonaufzeichnungsfunktion an dem zweiten elektronischen Gerät der zwei zweiten elektronischen Geräte aktiviert ist.

5. Verfahren nach einem der Ansprüche 1 bis 4, wobei das Verfahren vor dem Senden von zweiten Angabeinformationen an ein drittes elektronisches Gerät ferner umfasst:
Empfangen von Bestätigungsnachrichten für die ersten Angabeinformationen, die von den mindestens zwei zweiten elektronischen Geräten gesandt werden, wobei die Bestätigungsnachrichten angeben, dass die Tonaufzeichnungsfunktionen an den korrespondierenden zweiten elektronischen Geräten aktiviert sind.

6. Ortsidentifizierungsverfahren, angewandt auf ein zweites elektronisches Gerät, wobei das Verfahren umfasst:
Empfangen (401) von ersten Angabeinformationen von einem ersten elektronischen Gerät, wobei die ersten Angabeinformationen dem zweiten elektronischen Gerät angeben, eine Tonaufzeichnungsfunktion zu aktivieren;
Aktivieren (402) der Tonaufzeichnungsfunktion basierend auf den ersten Angabeinformationen;
Bestimmen (406) einer relativen Ortsbeziehung zwischen dem zweiten elektronischen Gerät und einem dritten elektronischen Gerät basierend auf einem Ultraschallsignal, das abwechselnd von dem dritten elektronischen Gerät über einen ersten Lautsprecher mit einer progressiv abnehmenden Frequenz und über einen zweiten Lautsprecher mit einer progressiv zunehmenden Frequenz gesandt wird und das basierend auf der Tonaufzeichnungsfunktion detektiert wird;
Senden der relativen Ortsbeziehung zwischen dem zweiten elektronischen Gerät und dem dritten elektronischen Gerät an das erste elektronische Gerät; und
Empfangen einer relativen Ortsbeziehung zwischen jedem von mindestens zwei zweiten elektronischen Geräten und dem dritten elektronischen Gerät, die von dem ersten elektronischen Gerät gesandt wird, wobei die mindestens zwei zweiten elektronischen Geräte das zweite elektronische Gerät umfassen.

7. Verfahren nach Anspruch 6, wobei das zweite elektronische Gerät eines von zwei zweiten elektronischen Geräten ist und die relative Ortsbeziehung zwischen dem zweiten elektronischen Gerät und dem dritten elektronischen Gerät umfasst: das zweite elektronische Gerät ist an einer ersten Seite des dritten elektronischen Geräts angeordnet, wobei die erste Seite gegenüber einer zweiten Seite ist, die zweite Seite eine relative Ortsbeziehung zwischen dem anderen zweiten elektronischen Gerät der zwei zweiten elektronischen Geräte und dem dritten elektronischen Gerät angibt und die erste Seite eine linke Seite oder eine rechte Seite ist.

8. Verfahren nach Anspruch 6, wobei das zweite elektronische Gerät eines von zwei zweiten elektronischen Geräten ist und das Verfahren ferner umfasst:
Empfangen der von dem ersten elektronischen Gerät gesandten ersten Angabeinformationen;
Aktivieren der Tonaufzeichnungsfunktion basierend auf den ersten Angabeinformationen;
Bestimmen einer relativen Ortsbeziehung zwischen dem zweiten elektronischen Gerät und dem anderen zweiten elektronischen Gerät basierend auf einem Ultraschallsignal, das von dem anderen zweiten elektronischen Gerät der zwei zweiten elektronischen Geräte ist und das basierend auf der Tonaufzeichnungsfunktion detektiert wird; und
Senden der relativen Ortsbeziehung zwischen dem zweiten elektronischen Gerät und dem anderen zweiten elektronischen Gerät an das erste elektronische Gerät.

9. Verfahren nach Anspruch 6, wobei das zweite elektronische Gerät eines von zwei zweiten elektronischen Geräten ist und das Verfahren ferner umfasst:
Empfangen von von dem ersten elektronischen Gerät gesandten zweiten Angabeinformationen, wobei die zweiten Angabeinformationen dem zweiten elektronischen Gerät angeben, das Ultraschallsignal wiederzugeben; und
Wiedergeben des Ultraschallsignals basierend auf den zweiten Angabeinformationen, wobei das Ultraschallsignal verwendet wird, eine relative Ortsbeziehung zwischen den zwei zweiten elektronischen Geräten zu bestimmen.

10. Verfahren nach einem der Ansprüche 7 bis 9, wobei das Verfahren nach dem Aktivieren, durch das zweite elektronische Gerät, der Tonaufzeichnungsfunktion ferner umfasst:
Senden einer Bestätigungsnachricht für die ersten Angabeinformationen an das erste elektronische Gerät, wobei die Bestätigungsnachricht für die ersten Angabeinformationen angibt, dass die Tonaufzeichnungsfunktion an dem zweiten elektronischen Gerät aktiviert ist.

11. Elektronisches Gerät, umfassend einen oder mehrere Prozessoren, einen Speicher und ein oder mehrere Programme, wobei das eine oder die mehreren Programme in dem Speicher gespeichert sind, und wenn das eine oder die mehreren Programme durch den Prozessor ausgeführt werden, das elektronische Gerät in die Lage versetzt wird, das Verfahren nach einem der Ansprüche 1 bis 5 durchzuführen.

12. Elektronisches Gerät, umfassend einen oder mehrere Prozessoren, einen Speicher und ein oder mehrere Programme, wobei das eine oder die mehreren Programme in dem Speicher gespeichert sind, und wenn das eine oder die mehreren Programme durch den Prozessor ausgeführt werden, das elektronische Gerät in die Lage versetzt wird, das Verfahren nach einem der Ansprüche 6 bis 10 durchzuführen.

13. Computerspeichermedium, umfassend Computeranweisungen, wobei, wenn die Computeranweisungen auf einem elektronischen Gerät ausgeführt werden, das elektronische Gerät in die Lage versetzt wird, das Ortsidentifizierungsverfahren nach einem der Ansprüche 1 bis 5 oder der Ansprüche 6 bis 10 durchzuführen.

14. Computerprogrammprodukt, wobei, wenn das Computerprogrammprodukt auf einem Computer ausgeführt wird, der Computer in die Lage versetzt wird, das Ortsidentifizierungsverfahren nach einem der Ansprüche 1 bis 5 oder der Ansprüche 6 bis 10 durchzuführen.

## Revendications

1. Procédé d'identification de localisation, appliqué à un premier dispositif électronique, le procédé comprenant :
l'envoi (401) de premières informations d'indication à au moins deux deuxièmes dispositifs électroniques, les premières informations d'indication indiquant aux deuxièmes dispositifs électroniques correspondants d'activer des fonctions d'enregistrement sonore ;
l'envoi (404) de secondes informations d'indication à un troisième dispositif électronique, les secondes informations d'indication indiquant au troisième dispositif électronique d'envoyer un signal ultrasonore, et le signal ultrasonore étant envoyé alternativement par l'intermédiaire d'un premier haut-parleur avec une fréquence progressivement décroissante et par l'intermédiaire d'un second haut-parleur avec une fréquence progressivement croissante, et étant utilisé pour déterminer une relation de localisation relative entre le troisième dispositif électronique et chacun des au moins deux deuxièmes dispositifs électroniques ;
la réception (407) de la relation de localisation relative entre chacun des au moins deux deuxièmes dispositifs électroniques et le troisième dispositif électronique qui est envoyée par chacun des au moins deux deuxièmes dispositifs électroniques ; et
l'envoi de la relation de localisation relative entre chacun des au moins deux deuxièmes dispositifs électroniques et le troisième dispositif électronique aux au moins deux deuxièmes dispositifs électroniques et au troisième dispositif électronique ; ou
la détermination d'une relation de localisation relative entre tous les deux des au moins deux deuxièmes dispositifs électroniques sur la base de la relation de localisation relative entre chacun des au moins deux deuxièmes dispositifs électroniques et le troisième dispositif électronique.

2. Procédé selon la revendication 1, les au moins deux deuxièmes dispositifs électroniques comprenant deux deuxièmes dispositifs électroniques, et la relation de localisation relative entre chacun des au moins deux deuxièmes dispositifs électroniques et le troisième dispositif électronique comprenant : l'un des deux deuxièmes dispositifs électroniques est situé sur un premier côté du troisième dispositif électronique, et l'autre deuxième dispositif électronique parmi les deux dispositifs électroniques est situé sur un second côté du troisième dispositif électronique, le premier côté étant un côté gauche ou un côté droit, et le second côté étant opposé au premier côté.

3. Procédé selon la revendication 1, les au moins deux deuxièmes dispositifs électroniques comprenant deux deuxièmes dispositifs électroniques, la relation de localisation relative entre chacun des au moins deux deuxièmes dispositifs électroniques et le troisième dispositif électronique comprenant : les deux deuxièmes dispositifs électroniques sont tous deux situés sur un côté gauche ou un côté droit du troisième dispositif électronique, et la détermination d'une relation de localisation relative entre tous les deux des au moins deux deuxièmes dispositifs électroniques sur la base de la relation de localisation relative entre chacun des au moins deux deuxièmes dispositifs électroniques et le troisième dispositif électronique comprenant :
l'envoi des premières informations d'indication à l'un des deux deuxièmes dispositifs électroniques ;
l'envoi des secondes informations d'indication à l'autre deuxième dispositif électronique parmi les deux deuxièmes dispositifs électroniques, les secondes informations d'indication indiquant à l'autre deuxième dispositif électronique de lire le signal ultrasonore, et le signal ultrasonore étant utilisé pour déterminer une relation de localisation relative entre les deux deuxièmes dispositifs électroniques ; et
la réception de la relation de localisation relative entre les deux deuxièmes dispositifs électroniques qui est envoyée par l'autre deuxième dispositif électronique.

4. Procédé selon la revendication 3, avant l'envoi des secondes informations d'indication à l'autre deuxième dispositif électronique parmi les deux deuxièmes dispositifs électroniques, le procédé comprenant en outre :
la réception d'un message d'accusé de réception qui concerne les premières informations d'indication et qui est envoyé par le deuxième dispositif électronique parmi les deux deuxièmes dispositifs électroniques, le message d'accusé de réception concernant les premières informations d'indication indiquant qu'une fonction d'enregistrement sonore est activée sur le deuxième dispositif électronique parmi les deux deuxièmes dispositifs électroniques.

5. Procédé selon l'une quelconque des revendications 1 à 4, avant l'envoi de secondes informations d'indication à un troisième dispositif électronique, le procédé comprenant en outre :
la réception de messages d'accusé de réception concernant les premières informations d'indication qui sont envoyés par les au moins deux deuxièmes dispositifs électroniques, les messages d'accusé de réception indiquant que les fonctions d'enregistrement sonore sont activées sur les deuxièmes dispositifs électroniques correspondants.

6. Procédé d'identification de localisation, appliqué à un deuxième dispositif électronique, le procédé comprenant :
la réception (401) de premières informations d'indication en provenance d'un premier dispositif électronique, les premières informations d'indication indiquant au deuxième dispositif électronique d'activer une fonction d'enregistrement sonore ;
l'activation (402) de la fonction d'enregistrement sonore sur la base des premières informations d'indication ;
la détermination (406) d'une relation de localisation relative entre le deuxième dispositif électronique et un troisième dispositif électronique sur la base d'un signal ultrasonore qui est envoyé alternativement depuis le troisième dispositif électronique par l'intermédiaire d'un premier haut-parleur avec une fréquence progressivement décroissante et par l'intermédiaire d'un second haut-parleur avec une fréquence progressivement croissante, et qui est détecté sur la base de la fonction d'enregistrement sonore ;
l'envoi de la relation de localisation relative entre le deuxième dispositif électronique et le troisième dispositif électronique au premier dispositif électronique ; et
la réception d'une relation de localisation relative entre chacun d'au moins deux deuxièmes dispositifs électroniques et le troisième dispositif électronique qui est envoyée par le premier dispositif électronique, les au moins deux deuxièmes dispositifs électroniques comprenant le deuxième dispositif électronique.

7. Procédé selon la revendication 6, le deuxième dispositif électronique étant l'un de deux deuxièmes dispositifs électroniques, et la relation de localisation relative entre le deuxième dispositif électronique et le troisième dispositif électronique comprenant : le deuxième dispositif électronique est situé sur un premier côté du troisième dispositif électronique, le premier côté étant opposé à un second côté, le second côté indiquant une relation de localisation relative entre l'autre deuxième dispositif électronique parmi les deux deuxièmes dispositifs électroniques et le troisième dispositif électronique, et le premier côté étant un côté gauche ou un côté droit.

8. Procédé selon la revendication 6, le deuxième dispositif électronique étant l'un de deux deuxièmes dispositifs électroniques, et le procédé comprenant en outre :
la réception des premières informations d'indication envoyées par le premier dispositif électronique ;
l'activation de la fonction d'enregistrement sonore sur la base des premières informations d'indication ;
la détermination d'une relation de localisation relative entre le deuxième dispositif électronique et l'autre deuxième dispositif électronique sur la base d'un signal ultrasonore qui provient de l'autre deuxième dispositif électronique parmi les deux deuxièmes dispositifs électroniques et qui est détecté sur la base de la fonction d'enregistrement sonore ; et
l'envoi de la relation de localisation relative entre le deuxième dispositif électronique et l'autre deuxième dispositif électronique au premier dispositif électronique.

9. Procédé selon la revendication 6, le deuxième dispositif électronique étant l'un de deux deuxièmes dispositifs électroniques, et le procédé comprenant en outre :
la réception de secondes informations d'indication envoyées par le premier dispositif électronique, les secondes informations d'indication indiquant au deuxième dispositif électronique de lire le signal ultrasonore ; et
la lecture du signal ultrasonore sur la base des secondes informations d'indication, le signal ultrasonore étant utilisé pour déterminer une relation de localisation relative entre les deux deuxièmes dispositifs électroniques.

10. Procédé selon l'une quelconque des revendications 7 à 9, après l'activation, par le deuxième dispositif électronique, de la fonction d'enregistrement sonore, le procédé comprenant en outre :
l'envoi d'un message d'accusé de réception concernant les premières informations d'indication au premier dispositif électronique, le message d'accusé de réception concernant les premières informations d'indication indiquant que la fonction d'enregistrement sonore est activée sur le deuxième dispositif électronique.

11. Dispositif électronique, comprenant un ou plusieurs processeurs, une mémoire, et un ou plusieurs programmes, le ou les programmes étant stockés dans la mémoire, et lorsque le ou les programmes sont exécutés par le processeur, le dispositif électronique est activé pour réaliser le procédé selon l'une quelconque des revendications 1 à 5.

12. Dispositif électronique, comprenant un ou plusieurs processeurs, une mémoire, et un ou plusieurs programmes, le ou les programmes étant stockés dans la mémoire, et lorsque le ou les programmes sont exécutés par le processeur, le dispositif électronique est activé pour réaliser le procédé selon l'une quelconque des revendications 6 à 10.

13. Support de stockage informatique, comprenant des instructions informatiques, lorsque les instructions informatiques sont exécutées sur un dispositif électronique, le dispositif électronique est activé pour réaliser le procédé d'identification de localisation selon l'une quelconque des revendications 1 à 5 ou des revendications 6 à 10.

14. Produit de programme informatique, lorsque le produit programme informatique s'exécute sur un ordinateur, l'ordinateur est activé pour réaliser le procédé d'identification de localisation selon l'une quelconque des revendications 1 à 5 ou des revendications 6 à 10.
